# EUROPEAN PATENT SPECIFICATION

(11) **EP 3 796 291 B1**
(45) Date of publication and mention of the grant of the patent: **14.08.2024**
(21) Application number: 19802599.1
(22) Date of filing: 10.05.2019
(51) Int. Cl.: G09F 3/03, B42D 25/30, B42D 25/328, B42D 25/425, B42D 25/373, G01N 21/3581

(54) **SECURITY DEVICE, TRANSFER FOIL AND SECURITY ARTICLE**
SICHERHEITSVORRICHTUNG, TRANSFERFOLIE UND SICHERHEITSARTIKEL
DISPOSITIF DE SÉCURITÉ, FEUILLE DE TRANSFERT ET ARTICLE DE SÉCURITÉ

(30) Priority: 17.05.2018 JP 2018095566
(43) Date of publication of application: 24.03.2021
(73) Proprietor: Toppan Printing Co., Ltd., Tokyo 110-0016 (JP)
(72) Inventor: GOCHO, Satoshi, Tokyo 110-0016 (JP); MUTA, Keitaro, Himeji-shi, Hyogo 670-8567 (JP)
(74) Representative: TBK
(86) International application number: PCT/JP2019/018701
(87) International publication number: WO 2019/221019

(56) References cited:
- WO-A2-2012/094436
- JP-A- 2008 254 310
- JP-A- 2010 019 913
- JP-A- 2010 019 913
- JP-A- 2012 173 430
- JP-A- 2012 173 430
- JP-A- 2013 073 131
- JP-A- 2013 073 135
- JP-A- 2016 000 498
- JP-A- 2016 141 065
- JP-A- 2016 141 065

## Description

### FIELD

The present invention relates to a security device, a transfer foil, and a security-device-equipped article, hereafter simply referred to as security article.

### BACKGROUND

Conventionally, various techniques have been contrived for preventing forgery of securities such as stocks, bonds, checks, gift certificates, lottery tickets, commuter passes, etc. As one of such contrivances, there is a technique of attaching, to such securities, a mark that is difficult to distinguish with the unaided eye, the presence of which is difficult to distinguish with the unaided eye, and reading the mark by means of a machine.

JP 2000 309736 A discloses an infrared-absorbing ink composition containing a coloring material composed of tin-doped indium oxide powder which has a low absorption in the visible light region and has absorption in the infrared region.

JP H06 297888 A discloses printing a barcode using a special fluorescent ink that is colorless when illuminated with visible light, and emits fluorescence when ultraviolet rays are applied.

JP 2012 173430 A discloses a hologram label comprising an anticounterfeit structure including a reflective layer, and an adhesive layer provided on one main surface of the anticounterfeit structure. The adhesive layer includes a first portion in contact with a partial region of the main surface and a second portion in contact with another partial region of the main surface. The first portion has a lower adhesive strength to the anticounterfeit structure than that achieved by the second portion. When an illegal attempt is made to remove the hologram label from an article, part of the reflective layer remains on the article and leaves a message such as "open".

JP 2013 073131 A discloses an anticounterfeit label having a brittle layer that is broken in a pattern corresponding to a distribution of adhesive strength to leave a character string such as "VOID" on an article when the anticounterfeit label is peeled off the article.

JP 2008 254310 A discloses a method using terahertz electromagnetic waves for determining authenticity, and an anticounterfeit structure applied to the method. The anticounterfeit structure includes a conductive layer with openings arranged in a predetermined pattern, insulating layers disposed on the front and back of the conductive layer, and a concealing layer with insulating properties. In the authenticity determination method described in this document, terahertz electromagnetic waves are applied to the anticounterfeit structure, and the transmittance obtained thereby is compared with a reference value to determine the presence or absence of a difference therebetween.

JP 2016 141065 A discloses a security device including an anticounterfeit structure that exhibits a predetermined transmittance when terahertz electromagnetic waves of a specific frequency are applied. The security device has the features specified in the preamble of claim 1.

### SUMMARY

### TECHNICAL PROBLEM

The present invention aims to provide a security device that produces a falsification-suppression effect.

### SOLUTION TO PROBLEM

According to a first aspect of the present invention, there is provided a security device as specified in claim 1.

According to a second aspect of the present invention, there is provided a transfer foil a specified in claim 9.

According to a third aspect of the present invention, there is provided a security-device-equipped article as specified in claim 10.

### ADVANTAGEOUS EFFECTS OF INVENTION

According to the present invention, it is possible to provide a security device that produces a falsification-suppression effect.

### BRIEF DESCRIPTION OF THE DRAWINGS

FIG. 1 is a schematic top view of a security-device-equipped article according to an embodiment of the present invention.
FIG. 2 is an enlarged top view of the security device included in the security-device-equipped article shown in FIG. 1.
FIG. 3 is an enlarged top view of a metallic layer and an adhesive layer included in the security device shown in FIG. 2.
FIG. 4 is a cross-sectional view showing an example of a structure that can be adopted in the security-device-equipped article shown in FIG. 1.
FIG. 5 is a top view showing a state in which peeling off of the pressure-sensitive adhesive tape attached to the security-device-equipped article is started.
FIG. 6 is a top view showing an example of a state in which the peeling off of the pressure-sensitive adhesive tape is further advanced from the state shown in FIG. 5.
FIG. 7 is a cross-sectional view showing an example of a state in which the peeling off of the pressure-sensitive adhesive tape has been completed.
FIG. 8 is a bottom view showing a portion of the security device included in the structure shown in FIG. 7 which has been peeled off with the pressure-sensitive adhesive tape.
FIG. 9 is a top view showing a portion of the security device included in the structure shown in FIG. 7 which remains on the article after the peeling off with the pressure-sensitive adhesive tape.
FIG. 10 is a cross-sectional view showing another example of a structure that can be adopted for the security-device-equipped article shown in FIG. 1.
FIG. 11 is a cross-sectional view illustrating another example of a state in which peeling off of the adhesive tape has been completed.
FIG. 12 is a bottom view showing a portion of the security device included in the structure shown in FIG. 11 which has been peeled off with the adhesive tape.
FIG. 13 is a top view showing a portion of the security device included in the structure shown in FIG. 11 which remains on the article after the peeling off with the adhesive tape.
FIG. 14 is a top view showing a falsified security-device-equipped article obtained by attaching a portion that has been peeled off from the article with the adhesive tape, of the security device included in the structure shown in FIG. 11, to another article together with the adhesive tape.
FIG. 15 is an enlarged cross-sectional view of a portion of the falsified security-device-equipped article shown in FIG. 14.
FIG. 16 is a graph showing a relationship between the frequency and the transmittance of terahertz waves applied to an authentic security-device-equipped article and a falsified security-device-equipped article.
FIG. 17 is a graph showing the results obtained by applying terahertz waves to an authentic security-device-equipped article and a falsified security-device-equipped article at a constant frequency, and measuring the transmittance while moving the measurement point in the X direction.
FIG. 18 is a cross-sectional view of a security-device-equipped article including a security device according to a modification.
FIG. 19 is an enlarged top view of a metallic layer and an adhesive layer included in a security device according to another embodiment.
FIG. 20 is a cross-sectional view of a security-device-equipped article according to another embodiment.
FIG. 21 is a top view showing a state in which peeling off of a pressure-sensitive adhesive tape attached to the security-device-equipped article according to another embodiment is started.
FIG. 22 is a cross-sectional view of a security-device-equipped article according to another embodiment, showing an example of a state in which peeling off of the pressure-sensitive adhesive tape has been completed.
FIG. 23 is an enlarged bottom view showing a portion of the security device included in the structure shown in FIG. 22 which has been peeled off with the pressure-sensitive adhesive tape.
FIG. 24 is a top view showing a falsified security-device-equipped article obtained by attaching a portion that has been peeled off from the article by the pressure-sensitive adhesive tape, of the structure included in the structure shown in FIG. 22, to another article together with the pressure-sensitive adhesive tape.
FIG. 25 is an enlarged cross-sectional view of a portion of the falsified security-device-equipped article shown in FIG. 24.
FIG. 26 is a graph showing a relationship between the frequency and the transmittance of p-polarized light and s-polarized light as terahertz waves applied to the authentic security-device-equipped article shown in FIG. 20 and the falsified security-device-equipped article shown in FIG. 24.
FIG. 27 is a graph showing the results of measurement of the transmittance obtained by applying p-polarized light and s-polarized light of a constant frequency to the falsified security-device-equipped article shown in FIG. 24 as terahertz waves, while moving the measurement point in the X direction.
FIG. 28 is a graph showing the results of measurement of the transmittance obtained by applying p-polarized light and s-polarized light of a constant frequency to the authentic security device shown in FIG. 20 as terahertz waves, while moving the measurement point in the X direction.
FIG. 29 is a cross-sectional view schematically showing a transfer foil according to an embodiment of the present invention.
FIG. 30 is an enlarged top view of a structure according to a modification.
FIG. 31 is an enlarged top view of a structure according to another modification.
FIG. 32 is an enlarged top view of a structure according to yet another modification.
FIG. 33 is an enlarged top view of a structure according to yet another modification.
FIG. 34 is a top view illustrating an angle formed by the vibration direction of the electric field vector of terahertz waves with respect to one of the arrangement directions of the slits.
FIG. 35 is a graph illustrating an example of a transmission spectrum.

### DETAILED DESCRIPTION

Hereinafter, embodiments of the present invention will be described with reference to the drawings. Elements having the same or similar functions are denoted by identical reference numerals, and redundant descriptions thereof will be omitted.

### 1. Security-device-equipped article

### 1-1. Configuration

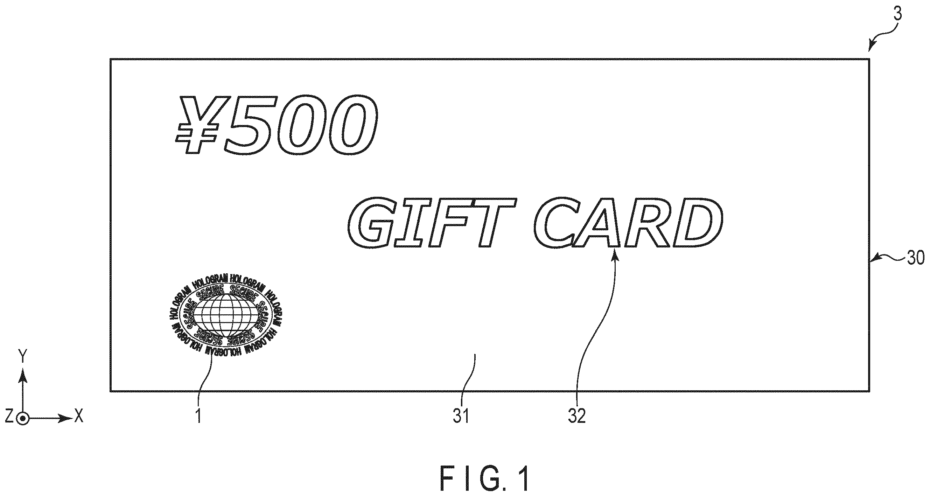

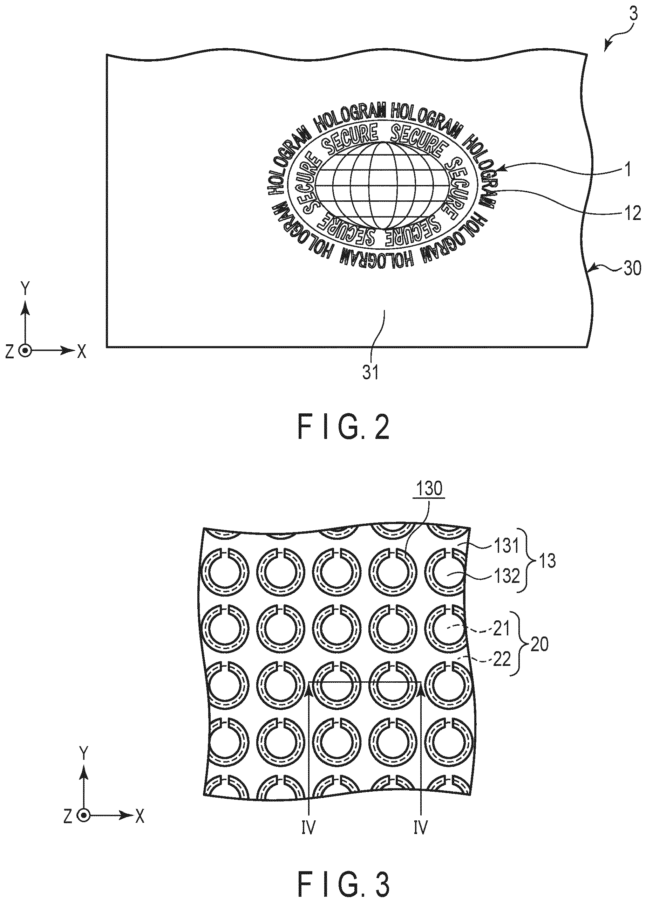

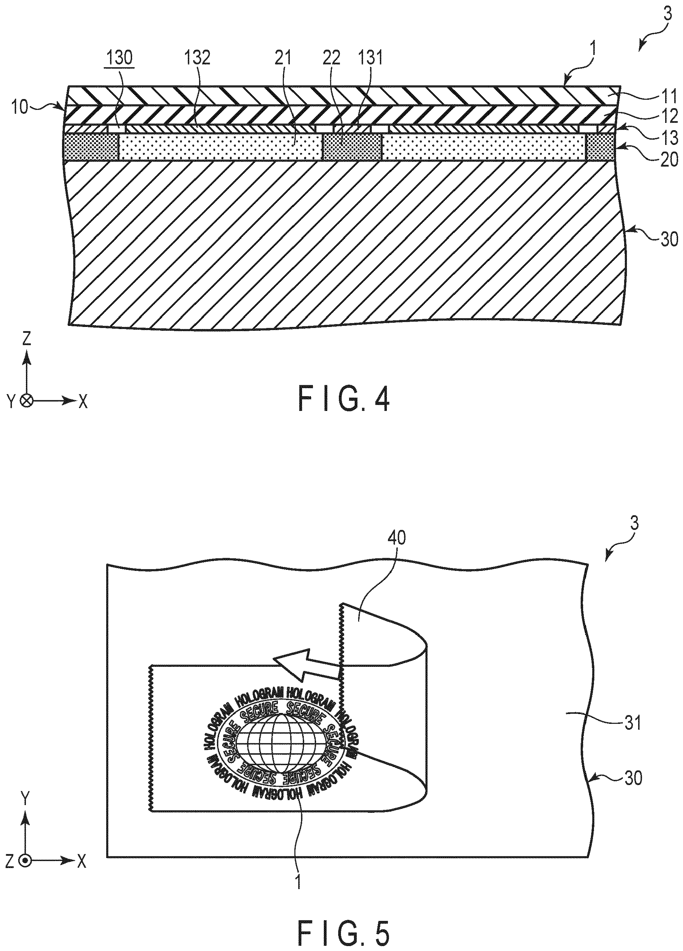

Configurations of a security device and a security-device-equipped article, hereafter simply referred to as security article, according to an embodiment of the present invention will be described with reference to FIGS. 1 to 4. FIG. 1 is a schematic top view of a security-device-equipped article according to an embodiment of the present invention. FIG. 2 is an enlarged top view of the security device included in the security-device-equipped article shown in FIG. 1. FIG. 3 is an enlarged top view of a metallic layer and an adhesive layer included in the security device shown in FIG. 2. FIG. 4 is a cross-sectional view showing an example of a structure that can be adopted in the security-device-equipped article shown in FIG. 1.

The cross section shown in FIG. 4 corresponds to a cross section taken along line IV-IV in FIG. 3. In FIGS. 1 to 4 and the other figures, an X direction refers to a direction that is parallel to the main surface of the security-device-equipped article, a Y direction refers to a direction that is parallel to the main surface and perpendicular to the X direction, and a Z direction refers to a direction that is perpendicular to the X and Y directions.

The security-device-equipped article 3 shown in FIGS. 1, 2 and 4 is, for example, a security such as a stock, bond, check, gift certificate, lottery ticket, or commuter pass. The security-device-equipped article 3 includes a security device 1 and an article 30 to which the security device 1 is attached by an adhesive layer 20 shown in FIGS. 3 and 4.

The article 30 does not include a conductive layer at least at a position where the security device 1 is attached. That is, the article 30 has insulating properties at least at the above-described position.

The article 30 includes, as shown in FIG. 1, an article main body 31 and a printed layer 32 provided on the article main body 31.

The article main body 31 is, for example, a paper substrate. The article main body 31 may be a plastic substrate. The shape of the article main body 31 is not limited, but is, for example, a film shape or a sheet shape.

The printed layer 32 is provided on the article main body 31. The printed layer 32 is made from, for example, one or more of a process ink, which is a coloring ink that does not emit fluorescence, a fluorescent ink, and a pearl ink, which exhibits interference colors by multiple-beam interference. The printed layer 32 displays images such as characters and figures.

The security device 1 includes an anticounterfeit structure 10 and the adhesive layer 20, as shown in FIG. 4.

The anticounterfeit structure 10 includes a metallic layer 13 which includes a plurality of slits 130. As will be described later, the anticounterfeit structure 10 has a transmittance peak resulting from resonance in the metallic layer 13.

The adhesive layer 20 is provided on one of the main surfaces of the anticounterfeit structure 10, and includes a first portion 21 that is in contact with a partial region of the main surface and a second portion 22 that is in contact with another partial region of the main surface. The first portion 21 achieves a smaller adhesive strength to the anticounterfeit structure 10 than the second portion 22 .

Herein, the anticounterfeit structure 10 further includes a protective layer 11 and a concealing layer 12, in addition to the metallic layer 13, as shown in FIG. 4. This will be described in detail below.

The protective layer 11 has, for example, visible light transmittance. The protective layer 11 has insulating properties. The protective layer 11 is made of, for example, a resin such as an acrylic resin.

Providing the protective layer 11 is advantageous in protecting the surface of the security device 1 from damage and degradation. The protective layer 11 may be omitted.

The concealing layer 12 is, for example, a layer provided with a diffraction structure such as a diffraction grating and hologram, or a printed layer.

The diffraction structure is, for example, a relief diffraction structure. The layer provided with the relief diffractive structure has a multilayer structure including a relief-structure-forming layer which is made of a transparent resin and which is provided with a relief diffractive structure on its surface, and a transparent reflective layer which has insulating properties and which covers the surface of the relief-structure-forming layer. An insulating material such as an insulating inorganic oxide is used for the transparent reflective layer. For the insulating inorganic oxide, SiO₂, for example, can be used. The transparent reflective layer may be omitted.

The printed layer is made of, for example, one or more of a process ink, which is a coloring ink that does not emit fluorescence, a fluorescent ink, and a pearl ink, which exhibits interference colors by multiple-beam interference. The printed layer displays, for example, images such as characters and figures.

The concealing layer 12 does not include a material that blocks, for example, electromagnetic waves in a terahertz wavelength band (hereinafter also referred to as "terahertz waves" or "terahertz electromagnetic waves") at least at the position of the metallic layer 13. It is preferable that the entire concealing layer 12 be made of an insulating material.

Providing the concealing layer 12 is advantageous in achieving a higher level of security, since the pattern formed on the metallic layer 13 will be concealed. Providing the concealing layer 12 is advantageous in improving the design, too. The concealing layer 12 may be omitted.

The metallic layer 13 is made of an elemental metal or an alloy. The metallic layer 13 is composed of, for example, a metal thin film layer made of one or more of Al, Fe, Au, Cu, Ag, Mg, Zn, and Sn. The metallic layer 13 may have either a single-layer structure or a multilayer structure. The metallic layer 13 should preferably have a thickness within the range of 20 nm to 200 nm, and more preferably within the range of 30 nm to 80 nm.

As shown in FIG. 3, the metallic layer 13 is provided with a plurality of slits 130 that are regularly arranged.

It is preferable that the width of the slit 130 fall within the range of 5 um to 50 um. It is preferable that the length of the slit 130 falls within the range of 100 µm to 1000 um.

Each of the plurality of slits 130 has one end facing the other end of the slit 130 with a gap interposed therebetween. It is preferable that a distance between one end of the slit 130 and the other end of the slit 130 fall within the range of 1 um to 50 um.

Forming the plurality of slits 130 in this manner is advantageous in improving the falsification-suppression effect, since a change in the structure of the metallic layer 13 caused by peeling off of the security device 1 and a change in the terahertz wave transmission characteristics of the security device 1 caused thereby are likely to occur. In addition, when the concealing layer 12 includes a diffraction structure, forming the plurality of slits 130 with such a configuration is more advantageous in improving the diffraction efficiency.

The slits 130 form a plurality of rings. Here, each of the slits 130 forms a ring that opens at a single position, that is, a C-shaped ring, as shown in FIG. 3. These rings are regularly arranged in two directions intersecting with each other, namely, an X direction and a Y direction herein. Herein, these rings are open at the same position.

It is preferable that the pitches of the slits 130 in the X and Y directions fall within the range of 100 µm to 1000 um.

Adopting the above-described structure for the metallic layer 13 is preferable from the viewpoint of design, since, for example, the slits 130 are less noticeable when the concealing layer 12 has visible light transmittance or when the concealing layer is omitted.

Alternatively, each of the rings may be composed of a plurality of slits 130 arranged in series at intervals from each other in the longitudinal direction. When such a configuration is adopted, it is possible to further improve the falsification-suppression effect.

Herein, of the metallic layer 13, a region located outside the rings formed by the slits 130 will be referred to as a "first region 131", and a region surrounded by the rings formed by the slits 130 will be referred to as a "second region 132".

The inner diameter of the ring formed by the slit 130 is preferably 1000 µm or less, and more preferably in the range of 20 um to 500 µm.

As the inner diameter of the ring increases, the slit 130 becomes more noticeable, possibly resulting in deterioration of the design. The lower limit of the inner diameter of the ring is set by, for example, a limit in manufacturing.

The adhesive layer 20 is provided on one of the main surfaces of the anticounterfeit structure 10. Herein, the adhesive layer 20 is provided on a main surface on the side of the metallic layer 13 of the anticounterfeit structure 10.

The adhesive layer 20 includes a first portion 21 and a second portion 22. The first portion 21 is in contact with a partial region of the main surface. The second portion 22 is in contact with another partial region of the main surface. The first portion 21 achieves a smaller adhesive strength to the anticounterfeit structure 10 than the second portion 22.

The adhesive layer 20 is partitioned into a first portion 21 and a second portion 22, as shown in FIG. 3. That is, herein, the first portion 21 and the second portion 22 are located on the second region 132 and the first region 131, respectively. The adhesive layer 20 may be configured in such a manner that the first portion 21 is located on the first region 131, and the second portion 22 is located on the second region 132. The arrangement of the first portion 21 and the second portion 22 need not correspond to the arrangement of the first region 131 and the second region 132.

The first portion 21 is formed of, for example, a layer made of a mixture of an adhesive and an additive for reducing the adhesive power, which will be exemplified below.

Examples of the adhesive that may be used include a vinyl acetate resin, an ethylene-vinyl acetate copolymer resin, a vinyl chloride-vinyl acetate copolymer resin, a polyester resin, a polyester urethane resin, an acrylic urethane resin, an epoxy resin, an epoxy urethane resin, a polycarbonate urethane resin, or a butyral resin. For the adhesive, one of these may be used alone, or two or more of these may be used.

Examples of the additive for reducing the adhesive power that may be used include nitrocellulose, cellulose acetate, cellulose acetate propionate, silica filler, silicon filler, polytetrafluoroethylene filler, polyethylene wax, polypropylene wax, and silicon oil. For the additive for reducing the adhesive power, one of these may be used alone, or two or more of these may be used.

When the first portion 21 is formed using a mixture of an adhesive and an additive for reducing the adhesive power, it is preferable that the proportion of the additive for reducing the adhesive power in the mixture be in the range of 1 to 50% by weight.

The second portion 22 is made of, for example, only the above-described adhesive, or a mixture of the adhesive and the additive for reducing the adhesive power. The proportion of the additive for reducing the adhesive power in the mixture is, for example, smaller than the proportion of the additive for reducing the adhesive power in the mixture used to form the first portion 21. This proportion should preferably be 50% by weight or less, and more preferably 20% by weight or less.

By configuring the materials forming the first portion 21 and the second portion 22 as described above, it is possible to cause a difference between the adhesive strengths of the adhesive layer 20 with respect to the first region 131 and the second region 132.

The adhesive layer 20 may be an adhesive layer made of a thermoplastic resin or an ultraviolet curable resin, or may be an adhesive layer made of a pressure-sensitive adhesive. In the former case, the security device 1 may be attached to the article 30 by using, for example, a transfer foil. In the latter case, the security device 1 can be used as an adhesive label.

In the security-device-equipped article 3, it is preferable that the adhesive strengths of the first portion 21 and the second portion 22 be within the following range. That is, it is preferable that the interlayer adhesive strength of the anticounterfeit structure 10 with respect to the article 30 at the second portion 22 be 5.0 N / 10 mm or greater. The interlayer adhesive strength of the anticounterfeit structure 10 with respect to the article 30 at the first portion 21 is preferably 3.0 N/ 10 mm or less, and more preferably in the range of 1.0 to 3.0 N / 10 mm.

The interlayer adhesive strength is a peel strength obtained by a 90° peel test defined in JIS K6854 - 1:1999 ("Adhesives-Determination of peel strength of bonded assemblies-Part 1: 90° peel).

Setting the adhesive strengths of the first portion 21 and the second portion 22 within the above-described range is advantageous in suppressing tampering of a security-device-equipped article which uses a pressure-sensitive adhesive tape or the like.

### 1-2. Method of manufacturing security device

The security device 1 described above can be manufactured, for example, as follows.

First, a protective layer 11 is formed on a substrate with a releasability, for example, a polyethylene terephthalate (PET) substrate with a fluorine-treated surface. The protective layer 11 can be formed by, for example, an application method.

Secondly, a concealing layer 12 is provided on a surface of the protective layer 11.

The concealing layer 12 including a relief diffractive structure is obtained by, for example, the following method.

First, a thermoplastic resin is applied to the protective layer 11 to form a coating film, and a plate is pressed against the coating film while applying heat thereto. After cooling, the plate is removed from the coating film to obtain a relief-structure-forming layer. Thereafter, a transparent reflective layer is formed, as necessary, on the relief-structure-forming layer by the vapor deposition method.

Alternatively, an ultraviolet curable resin is applied to the protective layer 11 to form a coating film, a plate is pressed against the coating film, and ultraviolet rays are applied in this state. Subsequently, the plate is removed from the coating film to obtain a relief-structure-forming layer. Thereafter, a transparent reflective layer is formed, as necessary, on the relief-structure-forming layer by the vapor deposition method.

The concealing layer 12 as a printed layer can be obtained by, for example, solid-painting the protective layer 11 with ink or printing characters, patterns, etc. on the protective layer 11.

Thirdly, a metallic layer 13 is formed on a surface of the concealing layer 12. The metallic layer 13 is formed by, for example, vacuum vapor deposition of a metal.

Fourthly, slits 130 are formed in the metallic layer 13. The formation of the slits 130 can be performed by a known method. For example, photolithography is utilized to form the slits 130.

Fifthly, an adhesive layer 20 is formed on a surface of the metallic layer 13. For example, a material of a second portion 22 is printed on a second region 132 of the metallic layer 13. Thereafter, a material of a first portion 21 is printed on a first region 131 by using a plate having a reversed pattern with respect to that of the plate used for printing the material of the second portion. The order of forming the first portion 21 and the second portion 22 may be reversed.

The security device 1 can be manufactured by the above-described steps.

### 1-3. Functions of security device

The security-device-equipped article 3 having the above-described configuration causes the following, when the security device 1 is to be peeled off with a pressure-sensitive adhesive tape or the like.

An example of a change that occurs when the security device 1 is peeled off from the security-device-equipped article 3 shown in FIGS. 1 and 2 will be described with reference to FIGS. 2 and 4 to 9.

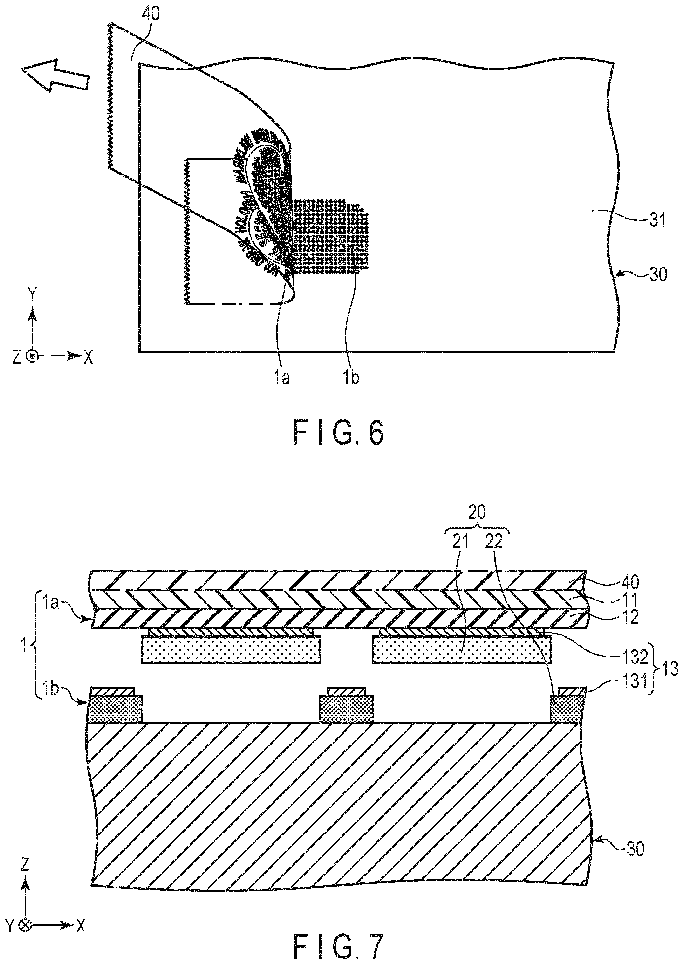

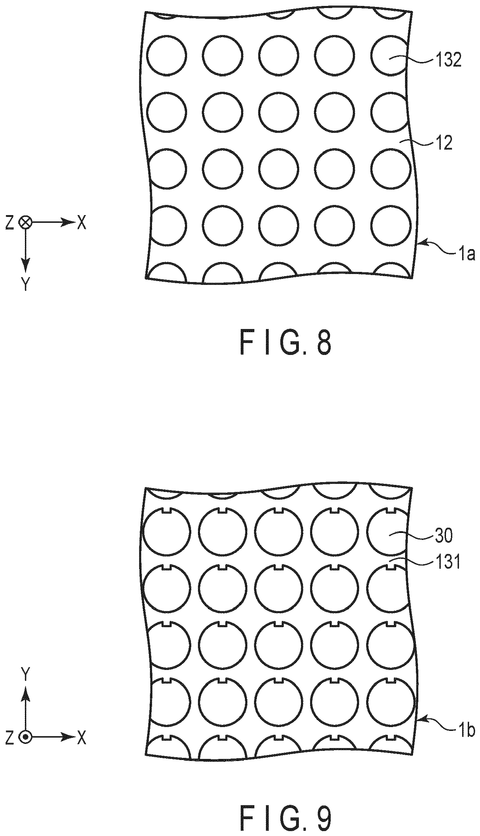

FIG. 5 is a top view showing a state in which peeling off of the pressure-sensitive adhesive tape attached to the security-device-equipped article is started. FIG. 6 is a top view showing an example of a state in which the peeling off of the pressure-sensitive adhesive tape is further advanced from the state shown in FIG. 5. FIG. 7 is a cross-sectional view showing an example of a state in which the peeling off of the pressure-sensitive adhesive tape has been completed. FIG. 8 is a bottom view showing a portion of the security device included in the structure shown in FIG. 7 which has been peeled off with the pressure-sensitive adhesive tape. FIG. 9 is a top view showing a portion of the security device included in the structure shown in FIG. 7 which remains on the article after the peeling off with the pressure-sensitive adhesive tape.

Herein, it is assumed that the following conditions are satisfied. That is, it is assumed that the first portion 21 is located on the second region 132, and that the second portion 22 is located on the first region 131, as shown in FIG. 4.

When the security device 1 is bonded to the article 30, an interlayer adhesive strength of the anticounterfeit structure 10 at the second region 132 with respect to the article 30 is smaller than an interlayer adhesive strength of the anticounterfeit structure 10 at the first region 131 with respect to the article 30.

As a method of peeling off the security device 1 with the above-described configuration from the article 30, for example, a method that uses a pressure-sensitive adhesive tape is conceivable. Herein, it is assumed that the following conditions are satisfied. That is, it is assumed that the adhesive power of the pressure-sensitive adhesive tape 40 with respect to the anticounterfeit structure 10 is smaller than the adhesive power of the second portion 22 with respect to the anticounterfeit structure 10, and is greater than the adhesive power of the first portion 21 with respect to the anticounterfeit structure 10; the adhesive power between the first portion 21 and the article 30 is smaller than the adhesive power between the first portion 21 and the second region 132; the adhesive power between the first portion 21 and the article 30 is smaller than the adhesive power between the second region 132 and the concealing layer 12; the adhesive power between the second portion 22 and the article 30 is greater than the adhesive power between the first region 131 and the concealing layer 12; and the adhesive power between the second portion 22 and the first region 131 is greater than the adhesive power between the first region 131 and the concealing layer 12.

In the method using the pressure-sensitive adhesive tape, the pressure-sensitive adhesive tape 40 is attached to the security device 1, and the pressure-sensitive adhesive tape 40 is peeled off, as shown in FIG. 5. Thereby, as shown in FIG. 6, the security device 1 is divided into a portion 1a that is to be peeled off with the pressure-sensitive adhesive tape 40 and a portion 1b that remains on the article 30.

A further description will be given with reference to the sectional view shown in FIG. 7. That is, a portion 1a of the security device 1 which is composed of the protective layer 11, the concealing layer 12, the second region 132, and the first portion 21 is peeled off from the article 30 by the pressure-sensitive adhesive tape 40. On the other hand, a portion 1b of the security device 1 which is composed of the first region 131 and the second portion 22, is not peeled off, and remains on a surface of the article 30.

As a result, the metallic layer included in the portion 1a of the security device 1 which has been peeled off with the pressure-sensitive adhesive tape 40 is composed only of the second region 132, as shown in FIG. 8. The metallic layer included in the portion 1b of the security device 1 which remains on a surface of the article 30 is composed only of the first region 131, as shown in FIG. 9.

Accordingly, when the security device 1 has the above-described structure, the pattern of the slits 130 provided in the metallic layer 13 before the peeling cannot be maintained when peeled off. The change in the pattern of the slits 130 causes the transmission spectrum of the terahertz waves to be changed, as will be described later. Accordingly, it is possible to determine whether or not tampering has been performed through the utilization of transmission of terahertz waves. Therefore, it is possible to achieve an excellent falsification-suppression effect.

Next, another example of a change that occurs when the security device 1 is peeled off from the security-device-equipped article 3 shown in FIG. 2 will be described, with reference to FIGS. 2, 4, and 10 to 15.

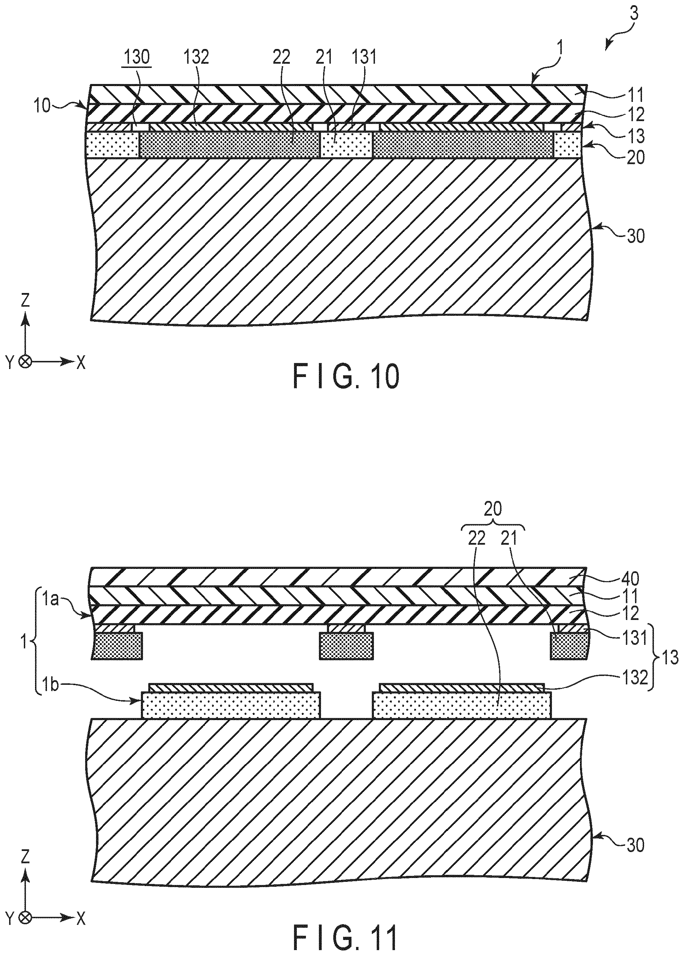

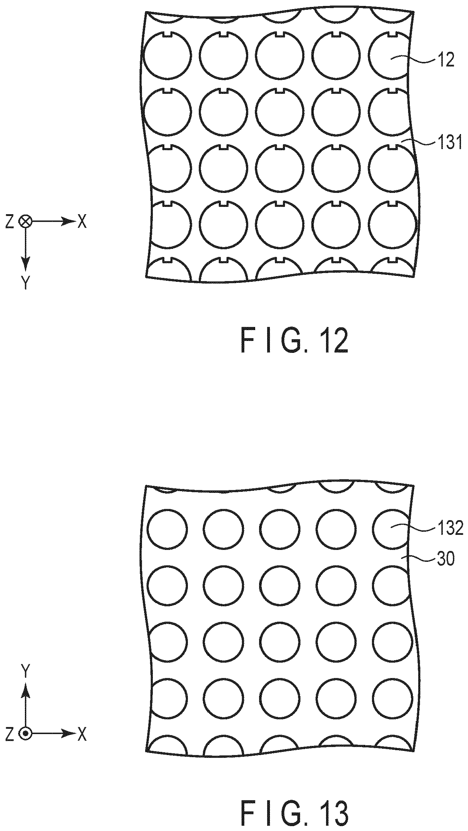

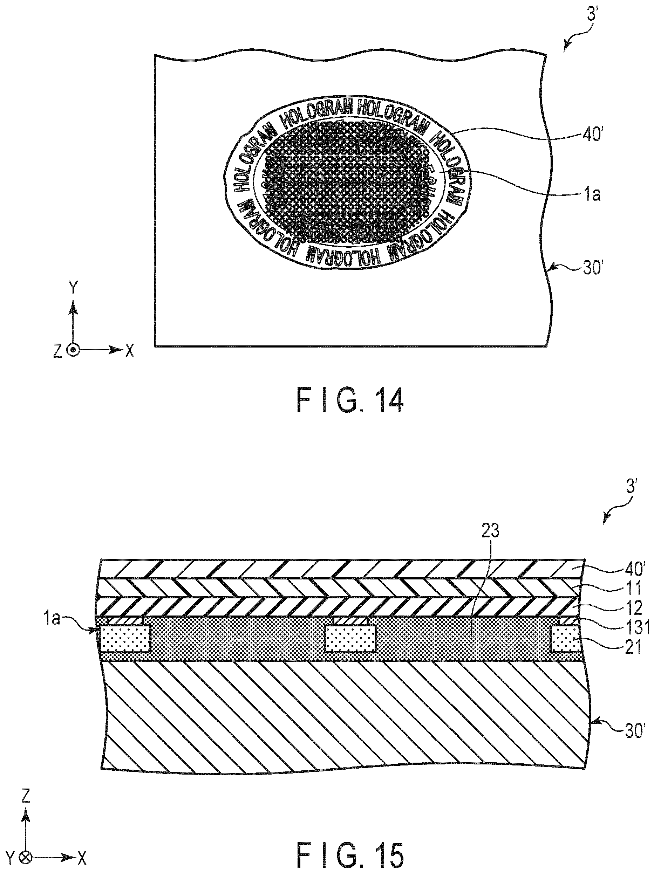

FIG. 10 is a cross-sectional view showing another example of a structure that can be adopted for the security-device-equipped article shown in FIG. 1. FIG. 11 is a cross-sectional view illustrating another example of a state in which peeling off of the pressure-sensitive adhesive tape has been completed. FIG. 12 is a bottom view showing a portion of the security device included in the structure shown in FIG. 11 which has been peeled off with the pressure-sensitive adhesive tape. FIG. 13 is a top view showing a portion of the security device included in the structure shown in FIG. 11 which remains on the article after the peeling off with the pressure-sensitive adhesive tape. FIG. 14 is a top view showing a falsified security-device-equipped article obtained by attaching a portion that has been peeled off from the article with the pressure-sensitive adhesive tape, of the security device included in the structure shown in FIG. 11, to another article together with the pressure-sensitive adhesive tape. FIG. 15 is an enlarged cross-sectional view of a portion of the falsified security-device-equipped article shown in FIG. 14.

Herein, it is assumed that the following conditions are satisfied. That is, it is assumed that the first portion 21 is located at the first region 131, and that the second portion 22 is located at the second region 132, as shown in FIG. 10.

When the security device 1 is bonded to the article 30, an interlayer adhesive strength of the anticounterfeit structure 10 at the first region 131 with respect to the article 30 is smaller than an interlayer adhesive strength of the anticounterfeit structure 10 at the second region 132 with respect to the article 30.

When the security device 1 with the above-described configuration is peeled off using the pressure-sensitive adhesive tape 40, as shown in FIG. 11, the security device 1 is divided into a portion 1a that is peeled off with the pressure-sensitive adhesive tape 40 and a portion 1b that remains on the article 30. That is, a portion 1a of the security device 1 which is composed of the protective layer 11, the concealing layer 12, the first region 131, and the first portion 21 is peeled off from the article 30 with the pressure-sensitive adhesive tape 40. On the other hand, a portion 1b of the security device 1 which is composed of the second region 132 and the second portion 22, is not peeled off, and remains on a surface of the article 30.

As a result, the metallic layer included in the portion 1a of the security device 1 which has been peeled off with the pressure-sensitive adhesive tape 40 is composed only of the first region 131, as shown in FIG. 12. The metallic layer included in the portion 1b of the security device 1 which remains on a surface of the article 30 is composed only of the second region 132, as shown in FIG. 13.

Next, a falsified security-device-equipped article 3' obtained by reattaching the portion 1a of the security device 1 which has been peeled off with the pressure-sensitive adhesive tape 40, to another article 30' will be described.

The falsified security-device-equipped article 3' shown in FIGS. 14 and 15 is obtained by attaching a piece of pressure-sensitive adhesive tape 40' obtained by processing the pressure-sensitive adhesive tape 40 shown in FIG. 11 to another article 30'. The adhesive tape 40' shown in FIGS. 14 and 15 is obtained by removing the periphery portion of the pressure-sensitive tape 40 surrounding the region to which the portion 1a is attached. In FIG. 15, reference numeral 23 denotes an adhesive used for reattaching the pressure-sensitive adhesive tape 40' to another article 30'.

The falsified security-device-equipped article 3' shown in FIG. 15 and the security-device-equipped article 3 prior to the peeling off are different in the following manner.

In the falsified security-device-equipped article 3' described above, the portion la includes only the first region 131 as the metallic layer. Such a falsified security-device-equipped article 3' differs from the security-device-equipped article 3 prior to the peeling off, i.e., from the authentic security-device-equipped article 3, in the shape of the openings provided in the metallic layer 13 .

When the shape of the openings provided in the metallic layer 13 changes, the transmission spectrum of terahertz waves changes, as will be described later. Accordingly, it is possible to determine whether or not tampering has been performed through the utilization of transmission of terahertz waves. Therefore, when the security device 1 has the above-described structure, it is possible to achieve an excellent falsification-suppression effect.

### 1-4. Authenticity determination

Hereinafter, an example of an authenticity determination method of the security device 1 will be described.

The authenticity determination of the security device 1 is performed by, for example, applying terahertz waves, in other words, electromagnetic waves within a band of frequencies of 0.1 to 0.8 THz, which is designated as a terahertz frequency band, and measuring the transmittance of the security device 1 with respect to terahertz waves.

A structure obtained by patterning the metallic layer into a plurality of C-shaped patterns, instead of providing a plurality of slits in the metallic layer, exhibits such characteristics that the transmittance is high in most of the terahertz frequency band, but the transmittance of terahertz waves of a specific frequency is low due to LC resonance. On the other hand, the structure of the present embodiment, which has a reversed relationship to this structure in terms of the positions of the metal portion and the other portions, has a reversed relationship to the previously described structure in terms of the characteristics, too. That is, the structure of the present embodiment exhibits such characteristics that the transmittance is low in most of the terahertz frequency band, and the transmittance of terahertz waves with a specific frequency is high.

Therefore, when terahertz waves are applied to the security device 1, terahertz waves with a specific frequency resonate in the metallic layer 13. That is, when the plurality of slits 130 form a plurality of rings, each of the slits 130 has a function similar to that of a split ring resonator.

If the width of the slit 130 is sufficiently narrow, the metallic layer 13 does not exhibit a high transmittance in most of the terahertz frequency band.

Therefore, when terahertz waves are applied to the security device 1, the security device 1 exhibits a high transmittance with respect to the terahertz waves with a specific frequency, and a peak of the transmittance occurs in the terahertz frequency band.

The transmission spectrum of the security device 1 with respect to the terahertz waves varies depending on the shape and pitch of the slits 130. Therefore, the transmission spectrum of terahertz waves differs between the security-device-equipped article 3 described with reference to FIG. 10, etc. and the falsified security-device-equipped article 3' described with reference to FIGS. 14 and 15, etc.

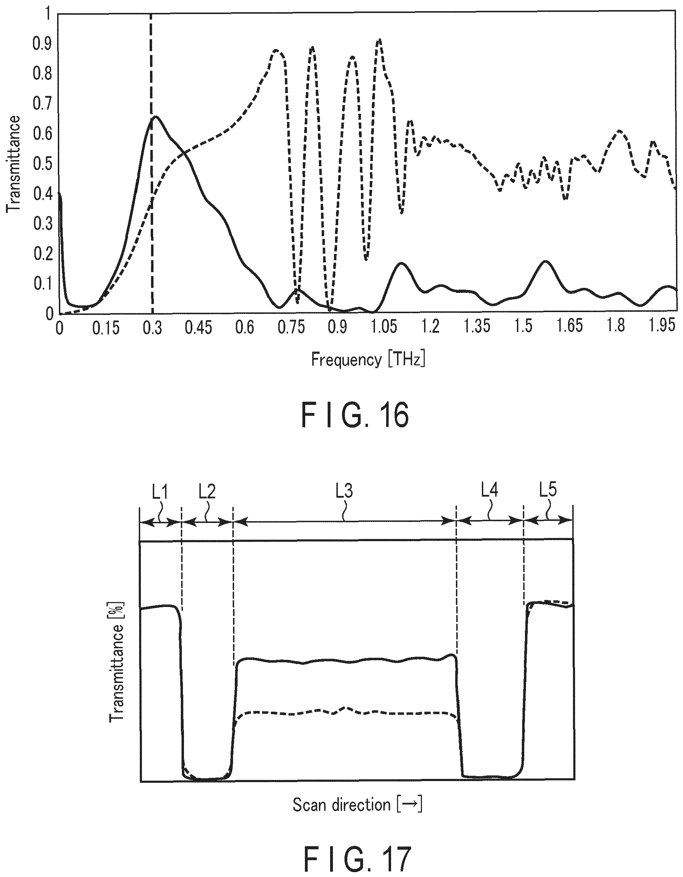

The change in the transmission spectrum will be described with reference to FIGS. 16 and 17. FIG. 16 is a graph showing a relationship between the frequency and the transmittance of terahertz waves applied to an authentic security-device-equipped article and a falsified security-device-equipped article. FIG. 17 is a graph showing the results obtained by applying terahertz waves to an authentic security-device-equipped article and a falsified security-device-equipped article at a constant frequency, and measuring the transmittance while moving the measurement point in the X direction.

When terahertz waves are applied toward the security device 1 of the authentic security-device-equipped article 3 described with reference to FIG. 10, etc. while changing the frequency thereof, for example, a transmission spectrum as depicted by the solid line in FIG. 16 is obtained. This transmission spectrum has a maximum transmission at a frequency of approximately 0.3 THz. That is, the security device 1 has a transmittance peak within the terahertz frequency band.

On the other hand, when terahertz waves are applied toward the portion 1a of the falsified security-device-equipped article 3' described with reference to FIGS. 14 and 15, etc. in the same manner as described above, the transmission spectrum as depicted by, for example, the broken line in FIG. 16 is obtained. In this transmission spectrum, the transmittance decreases at the above-mentioned specific frequency, and the transmittance increases in most of the band of frequencies equal to or higher than approximately 0.4 THz.

Therefore, when terahertz waves of 0.3 THz are applied to the security-device-equipped article 3 and the security-device-equipped article 3' in a direction perpendicular to their main surfaces, and the security-device-equipped article 3 and the security-device-equipped article 3' are scanned along the X direction, the scan results as shown in FIG. 17 can be obtained. In this case, terahertz waves are sequentially applied to, of the security-device-equipped article, a region in which the security device is not present, a region in which the metallic layer 13 is present but the slit 130 is not provided, a region in which the metallic layer 13 is present and the slit 130 is provided, a region in which the metallic layer 13 is present but the slit 130 is not provided, and a region in which the security device is not present.

The scan results obtained with respect to the security-device-equipped article 3 are as follows. That is, the security-device-equipped article 3 exhibits the highest transmittance in segments L1 and L5 corresponding to the region in which the security device 1 is not present, exhibits the lowest transmittance in segments L2 and L4 corresponding to the region in which the metallic layer 13 is present but the slit 130 is not provided, and exhibits, in segment L3 corresponding to the region in which the metallic layer 13 is present and the slit 130 is provided, a high transmittance that is not as high as that in segments L1 and L5.

On the other hand, scan results obtained with respect to the falsified security-device-equipped article 3' are as follows. That is, similarly to the security-device-equipped article 3, the security-device-equipped article 3' has the highest transmittance in the segments L1 and L5 corresponding to the region in which the security device 1 is not present, and has the lowest transmittance in the segments L2 and L4 corresponding to the region in which the metallic layer 13 is present but the slits 130 are not provided. However, in the segment L3 corresponding to the region in which the metallic layer 13 is present and the slits 130 are provided, the security-device-equipped article 3' does not show a transmittance that is as high as that of the security-device-equipped article 3.

In this manner, the transmission pattern obtained by application of terahertz wavesat a specific frequency differs between the case where the authentic security-device-equipped article 3 is used and the case where the falsified security-device-equipped article 3' is used. Accordingly, it is possible to perform the authenticity determination relatively easily by, for example, comparing these transmission patterns.

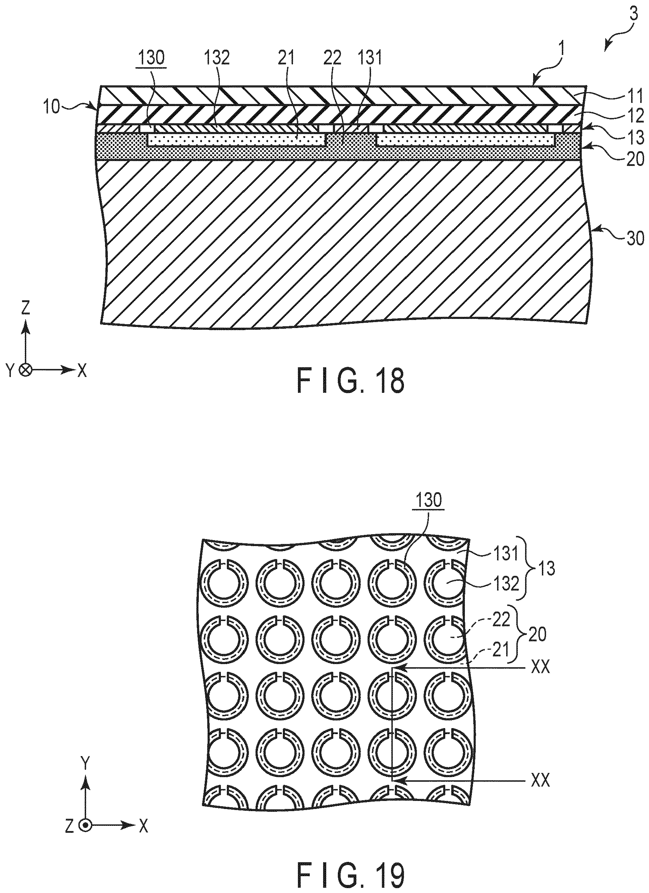

In the above-described embodiment, the first portion 21 and the second portion 22 are disposed so as not to be stacked in the thickness direction; however, the second portion 22 only needs to be in contact with a portion of one of the main surfaces of the anticounterfeit structure 10. Accordingly, the first portion 21 and the second portion 22 may be stacked in the thickness direction, for example, as shown in FIG. 18.

### 1-5. Security-device-equipped article according to another embodiment

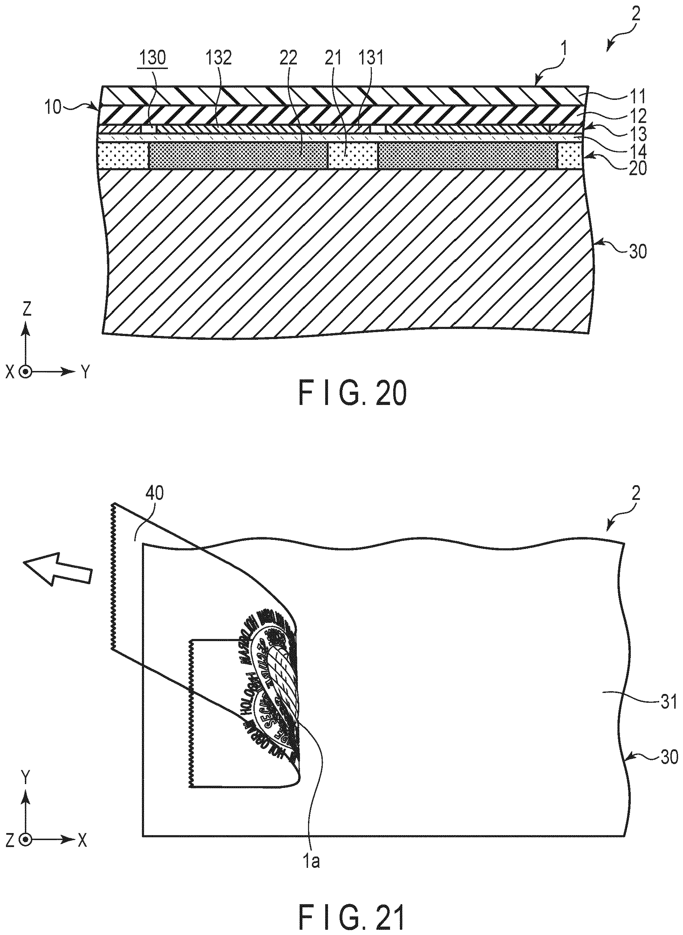

A configuration of a security-device-equipped article according to another embodiment of the present invention will be described with reference to FIGS. 19 and 20. FIG. 19 is an enlarged top view of a metallic layer and an adhesive layer included in a security device according to another embodiment. FIG. 20 is a cross-sectional view of a security-device-equipped article according to another embodiment.

FIG. 20 corresponds to a cross section taken along the line XX-XX in FIG. 19.

As shown in FIG. 20, a security-device-equipped article 2 according to another embodiment adopts substantially the same configuration as that described above except for the following points. That is, the anticounterfeit structure 10 further includes a ceramic layer 14. The ceramic layer 14 is made of a material having insulating properties. Examples of the material of the ceramic layer 14 include magnesium fluoride (MgF₂), silicon oxide (SiO₂ or SiOₓ), zinc sulfide (ZnS), aluminum oxide (Al₂O₃), and titanium dioxide (TiO₂). The ceramic layer 14 is formed by, for example, vacuum evaporation.

The ceramic layer 14 preferably has a thickness within the range of 10 nm to 500 nm, and more preferably within the range of 50 nm to 200 nm. It is preferable that the ceramic layer 14 be located on a region of the metallic layer 13 which extends across a boundary between the first portion 21 and the second portion 22. The ceramic layer 14 may be further provided at the positions of the slits 130. Herein, the ceramic layer 14 is provided so as to cover the entire metallic layer 13.

Although the ceramic layer 14 is provided only on a main surface of the metallic layer 13 that is not in contact with the concealing layer 12, the ceramic layer 14 may be provided only between the concealing layer 12 and the metallic layer 13, or the ceramic layer 14 may be provided on both of their main surfaces.

Further including the ceramic layer 14 is advantageous in determining whether or not a security-device-equipped article that adopts, as the article 30, a paper substrate, particularly a substrate that is likely to cause picking such as a paper substrate composed of short fibers, has been falsified through the utilization of transmission of terahertz waves, as will be described below.

In the security-device-equipped article 2 according to another embodiment with the above-described configuration, when the security device 1 is to be peeled off with a pressure-sensitive adhesive tape or the like, the following occurs. An example of a change that occurs when the security device 1 is peeled off from the security-device-equipped article 2 shown in FIG. 20 will be described with reference to FIGS. 20 to 23.

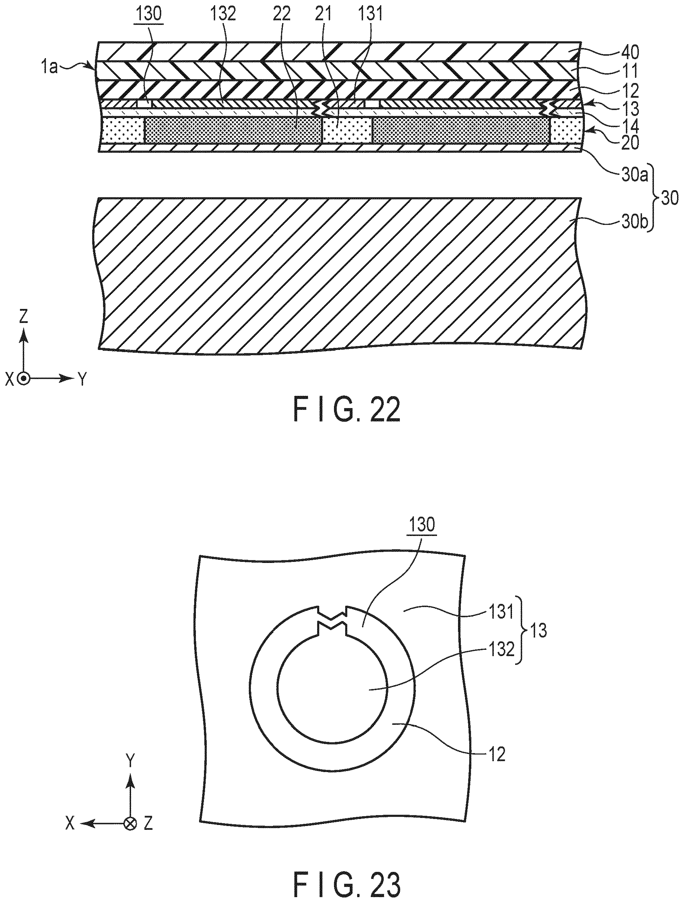

FIG. 21 is a top view showing a state in which peeling off of a pressure-sensitive adhesive tape attached to the security-device-equipped article according to another embodiment is started. FIG. 22 is a cross-sectional view of a security-device-equipped article according to another embodiment, showing an example of a state in which peeling off of the pressure-sensitive adhesive tape has been completed. FIG. 23 is an enlarged bottom view showing a portion of the security device included in the structure shown in FIG. 22 which has been peeled off with the pressure-sensitive adhesive tape.

Herein, it is assumed that the following conditions are satisfied. That is, it is assumed that the first portion 21 is located on the first region 131, the second portion 22 is located on the second region 132, and the ceramic layer 14 is located between the metallic layer 13 and the adhesive layer 20 as shown in FIG. 20; and a paper substrate that has a low surface strength is used as the article 30.

When the security device 1 is bonded to the article 30, the interlayer adhesive strength of the anticounterfeit structure 10 with respect to the article 30 is smaller at the position of the first region 131 than at the position of the second region 132.

When the security device 1 which adopts the above-described configuration is peeled off using the pressure-sensitive adhesive tape 40, the security device 1 may be peeled off together with the part 30a of the article 30 from the remaining portion 30b of the article 30, without causing partial delamination, as shown in FIG. 22. That is, the portion 1a to be peeled off with the pressure-sensitive adhesive tape 40 is composed of the protective layer 11, the concealing layer 12, the metallic layer 13, the ceramic layer 14, the adhesive layer 20, and the part 30a of the article 30.

When such peeling off is performed, a fissure that separates the first region 131 and the second region 132 from each other is generated at a position between one end of the slit 130 and the other end of the slit 130 in the metallic layer 13 included in the security device 1 of the portion 1a which has been peeled off with the pressure-sensitive adhesive tape 40, as shown in FIG. 23.

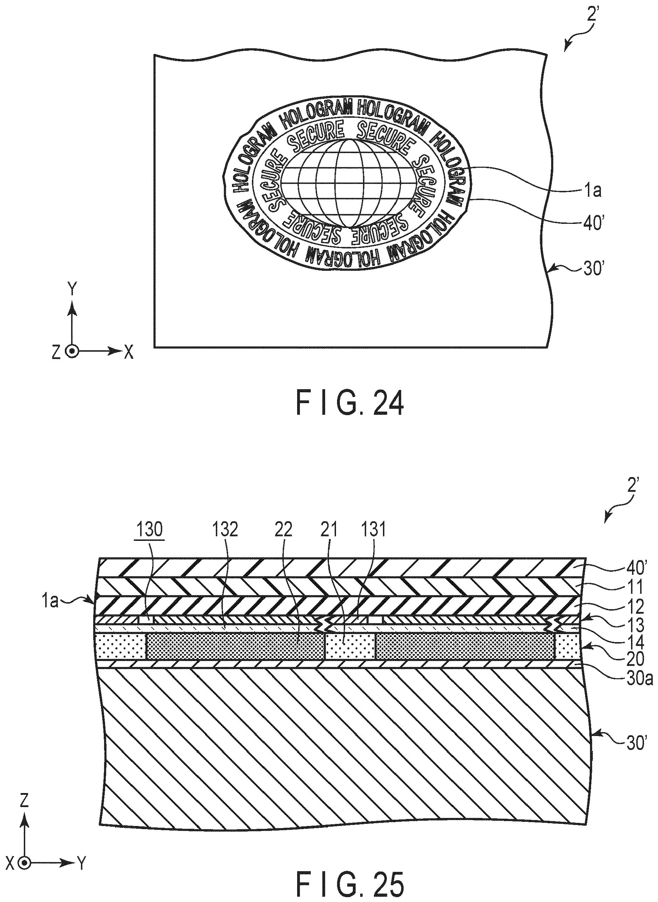

Next, a falsified security-device-equipped article 2' obtained by reattaching the portion 1a which has been peeled off with the pressure-sensitive adhesive tape 40 to another article 30' will be described, with reference to FIGS. 24 and 25.

FIG. 24 is a top view showing a falsified security-device-equipped article obtained by attaching a portion that has been peeled off from the article with the pressure-sensitive adhesive tape, of the structure shown in FIG. 22, to another article together with the pressure-sensitive adhesive tape. FIG. 25 is an enlarged cross-sectional view of a portion of the falsified security-device-equipped article shown in FIG. 24.

The falsified security-device-equipped article 2' shown in FIGS. 24 and 25 is obtained in the same manner as that described with reference to FIGS. 14 and 15.

The falsified security-device-equipped article 2' shown in FIG. 25 and the security-device-equipped article 2 prior to the peeling off are different in the following manner.

In the falsified security-device-equipped article 2' described above, the portion 1a includes the metallic layer 13 fissured at a position between one end of each slit 130 and the other end of the slit 130. Such a falsified security-device-equipped article 2' differs from the security-device-equipped article 2 prior to the peeling off, i.e., from the authentic security-device-equipped article 2, in the shape of the opening provided in the metallic layer 13 .

In the authentic security-device-equipped article 2, the first region 131 and the second region 132 of the metallic layer 13 are electrically connected to each other, whereas in the falsified security-device-equipped article 2', the first region 131 and the second region 132 of the metallic layer 13 are insulated from each other. Therefore, as described above, the transmission spectrum of terahertz waves in the falsified security-device-equipped article 2' differs from that of the authentic security-device-equipped article 2.

The authenticity determination of the security-device-equipped article 2 according to another embodiment with the above-described configuration is performed, for example, as follows.

As shown in FIGS. 19 and 23, in the authentic security device, the slits 130 each forming a ring open in the Y direction are provided in the metallic layer 13, whereas in the falsified security device, a fissure is generated in the metallic layer 13 at the opening portion of the ring formed by the slit 130. Such a difference in structure causes a difference in transmission spectrum when p-polarized light or s-polarized light is applied as terahertz waves.

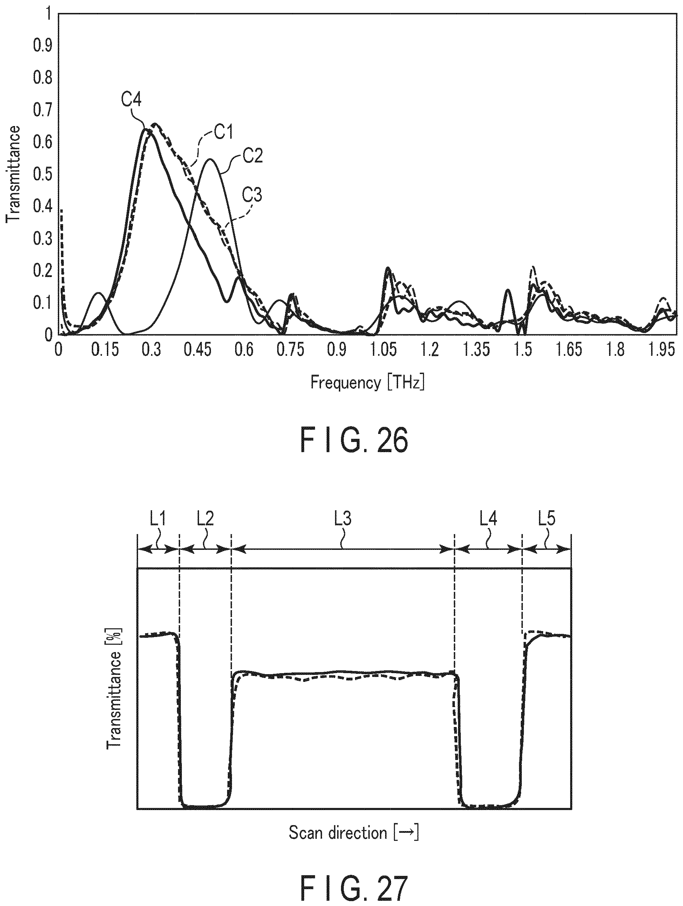

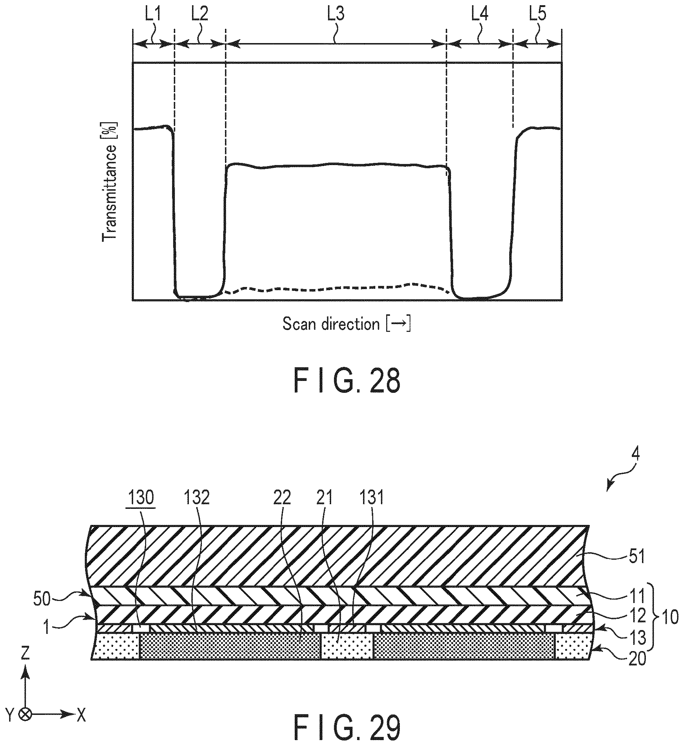

Hereinafter, a detailed description will be given with reference to FIGS. 26 to 28. FIG. 26 is a graph showing a relationship between the transmittance and the frequencies of p-polarized light and s-polarized light applied as terahertz waves to the authentic security-device-equipped article shown in FIG. 20 and the falsified security device shown in FIG. 24. FIG. 27 is a graph showing the results of measurement of the transmittance obtained by applying p-polarized light and s-polarized light of a constant frequency to the falsified security device shown in FIG. 24 as terahertz waves, while moving the measurement point in the X direction. FIG. 28 is a graph showing the results of measurement of the transmittance obtained by applying p-polarized light and s-polarized light of a constant frequency to the authentic security device shown in FIG. 20 as terahertz waves, while moving the measurement point in the X direction. Herein, the vibration direction of the electric field vector of the p-polarized light is parallel to the Y direction, and the vibration direction of the electric field vector of the s-polarized light is perpendicular to the Y direction.

When terahertz waves are applied toward the security device 1 included in the authentic security-device-equipped article 2 described with reference to FIG. 20, etc. while changing the frequency thereof, a transmission spectrum as depicted by C1 in FIG. 26, for example, is obtained. This transmission spectrum has a maximum transmission at a frequency of approximately 0.3 THz.

When p-polarized light is applied as terahertz waves toward the security device 1 while changing the frequency thereof, a transmission spectrum as depicted by, for example, C2 in FIG. 26 is obtained. In this transmission spectrum, the transmittance at a frequency of 0.3 THz decreases, and the maximum transmittance is at a frequency of approximately 0.5 THz.

On the other hand, when s-polarized light is applied as terahertz waves toward the portion 1a of the falsified security-device-equipped article 2' described with reference to FIGS. 24 and 25, etc. while changing the frequency thereof, a transmission spectrum as depicted by, for example, C3 in FIG. 26 is obtained. This transmission spectrum has a maximum transmission at a frequency of approximately 0.3 THz.

Similarly, when p-polarized light is applied toward the portion 1a while changing the frequency thereof, a transmission spectrum as depicted by, for example, C4 in FIG. 26 is obtained. This transmission spectrum has a maximum transmission at a frequency of approximately 0.3 THz.

That is, according to the authentic security-device-equipped article 2, the characteristics of the transmission spectrum resulting from the C-shape of the slits 130 included in the security device 1 can be detected when the vibration direction of the electric field vector of terahertz waves is changed. On the other hand, in the above-described falsified security-device-equipped article 2', the transmission spectrum hardly changes when the vibration direction of the electric field vector of the terahertz waves is changed.

Therefore, when p-polarized light and s-polarized light of a specific frequency, for example, 0.3 THz are applied to the authentic security-device-equipped article 2 and the falsified security-device-equipped article 2' as the terahertz waves on the principal surfaces thereof, and the authentic security-device-equipped article 2 and the falsified security-device-equipped article 2' are scanned along the X direction, the scan results as shown in FIGS. 27 and 28, for example, can be obtained. Herein, the lights are sequentially applied to the same regions as those described with reference to FIG. 17.

The scan results obtained by applying p-polarized light and s-polarized light to the falsified security-device-equipped article 2' as terahertz waves are shown by the broken line and the solid line in FIG. 27, respectively. That is, in the case of the security-device-equipped article 2', there is no significant difference between the scan results obtained by application of p-polarized light and the scan results obtained by application of s-polarized light.

On the other hand, the scan results obtained by applying p-polarized light and s-polarized light as terahertz waves to the authentic security-device-equipped article 2 are as indicated by the broken line and the solid line, respectively, in FIG. 28. That is, in the case of the security-device-equipped article 2, the scan results obtained by applying p-polarized light and the scan results obtained by applying s-polarized light have significantly different transmittances in the segment L3 corresponding to the region in which the metallic layer 13 is present and the slits 130 are provided.

As described above, when the authentic security-device-equipped article 2 is used, there is a significant difference between the scan results obtained by applying p-polarized light of a specific frequency and the scan results obtained by applying s-polarized light of the same frequency. On the other hand, when the falsified security-device-equipped article 2' is used, there is no significant difference between the scan results obtained by applying p-polarized light of a specific frequency and the scan results obtained by applying s-polarized light of the same frequency. Accordingly, it is possible to perform the authenticity determination relatively easily by, for example, comparing these transmission patterns.

### 1-6. Effects

It is difficult to remove the above-described security device 1 from the security-device-equipped article 3 attached to the article 30 without destroying or deforming the security device 1. Accordingly, it is possible to exhibit an excellent falsification-suppression effect.

The security device 1 includes a metallic layer 13 including a plurality of slits 130, and can determine whether or not tampering has occurred, based on a peak of transmittance resulting from a resonance in the metallic layer 13. According to an example, the resonance occurs by applying terahertz waves to the metallic layer 13. A special device is required for the application of the terahertz waves and the detection of the peak of the transmittance thereof.

Accordingly, the security device 1 has a structure whose shape and dimensions indicating that the security device 1 is an authentic product are less likely to be known to the others, compared to a structure whose shape and dimensions can be known using a readily available infrared-ray application device or ultraviolet-ray application device.

Moreover, according to one embodiment, authenticity determination of the security-device-equipped article 3 and the falsified security-device-equipped article 3' can be performed by scanning the security device 1 included in the authentic security-device-equipped article 3 while applying terahertz waves of a specific frequency thereto. Accordingly, it is possible to perform authenticity determination without requiring a long time.

Furthermore, since the slits 130 provided in the metallic layer 13 of the security device 1 are concealed by the concealing layer 12, it is difficult to detect their presence with the unaided eye or the sense of touch.

In addition, when a diffractive structure is adopted as the concealing layer 12, the metallic layer 13 can be used as a reflective layer, and a high diffraction efficiency can be achieved. When a diffraction structure having a high diffraction efficiency is provided, it is difficult to notice that a structure that enables authenticity determination using terahertz waves is provided below the diffraction structure. Accordingly, such a structure is effective in suppressing tampering.

### 2. Transfer Foil

Next, a transfer foil according to an embodiment of the present invention will be described.

FIG. 29 is a cross-sectional view schematically showing a transfer foil according to an embodiment of the present invention.

The transfer foil 4 shown in FIG. 29 includes a transfer material layer 50 including a security device 1 and a support member 51.

The support member 51 supports the transfer material layer 50 in such a manner that the anticounterfeit structure 10 is interposed between the support member 51 and the adhesive layer 20. The support member 51 is, for example, a resin film or sheet having a higher heat resistance than the adhesive layer 20. The support member 51 is made of, for example, a material having excellent heat resistance, such as polyethylene terephthalate (PET).

The support member 51 may include a release layer (not illustrated) on a surface on the side of the transfer material layer 50. As shown in FIG. 29, the release layer may be a protective layer 11 included in the security device 1. In the case where the release layer is separately provided, a fluororesin or a silicone resin, for example, can be used.

The transfer material layer 50 has the same layer configuration as that of the security device 1. Part of the transfer material layer 50 corresponds to the security device 1.

Various modifications can be made to the security device 1, the security-device-equipped articles 2 and 3, and the transfer foil 4 described above. For example, the security device 1, the security-device-equipped articles 2 and 3, and the transfer foil 4 may adopt the following structures.

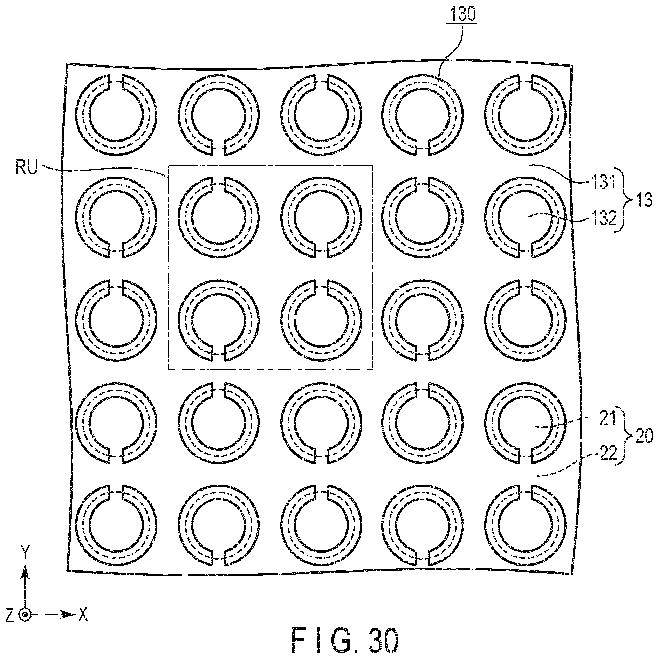

FIG. 30 is an enlarged top view of a structure according to a modification.

In FIG. 30, the metallic layer 13 has a structure in which unit structures RU are arranged in the X and Y directions. Each unit structure RU includes four slits 130. In each unit structure RU, the four slits 130 are arranged in the X and Y directions. Each of the rings formed by the four slits is open at an end portion in the Y direction. Specifically, two of the four rings are open at the same position, and the other two are open at a position 180° different from the former.

In the example shown in FIGS. 5 and 6, the pressure-sensitive adhesive tape 40 attached to the security-device-equipped article 3 is peeled from one end side in the X direction. However, the peeling off of the pressure-sensitive adhesive tape 40 may be performed from the other end side in the X direction, or may be performed from one end side or the other end side in the Y direction.

In the structure shown in FIG. 3, the rings formed by the slits 130 are open at the same position. When the security device 1 adopts the structure shown in FIG. 3, there is a possibility, for example, that a difference may occur in the ease of occurrence of breakage of the metallic layer 13 at the boundary between the first region 131 and the second region 132 between the case where peeling off of the pressure-sensitive adhesive tape 40 is performed from one end side in the Y direction and the case where peeling is performed from the other end side in the Y direction. As a result, the structure of the falsified security-device-equipped article 3' described with reference to FIGS. 14 and 15 may differ between the case where the pressure-sensitive adhesive tape 40 is peeled off from one end side in the Y direction and the case where the peeling off is performed from the other end side in the Y direction. Such a difference in the structure may affect the transmission spectrum indicated by the broken line in FIG. 16 and the transmittance distribution indicated by the broken line in FIG. 17.

When the structure described with reference to FIG. 30 is adopted, the ratio of the number of boundaries at which breakage of the metallic layer 13 is more likely to occur to the number of boundaries at which breakage of the metallic layer 13 is less likely to occur is substantially the same between the case where the pressure-sensitive adhesive tape 40 is peeled from one end side in the Y direction and the case where the adhesive tape 30 is peeled from the other end side in the Y direction. Therefore, differences are less likely to occur in the transmission spectrum indicated by the broken line in FIG. 16 and the transmittance distribution indicated by the broken line in FIG. 17, between the case where the pressure-sensitive adhesive tape 40 is peeled off from the one end side in the Y direction and the case where it is peeled off from the other end side in the Y direction. Therefore, the authenticity determination can be performed with a higher accuracy.

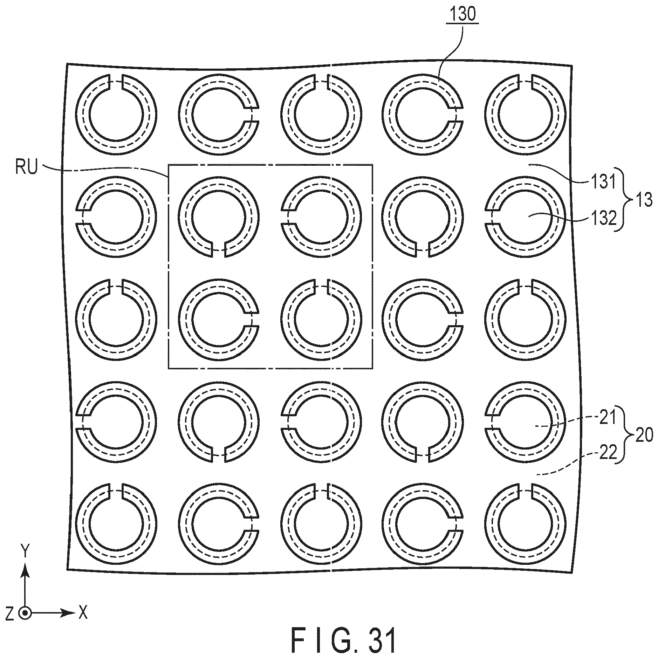

FIG. 31 is an enlarged top view of a structure according to another modification.

In FIG. 31, the metallic layer 13 has a structure in which unit structures RU are arranged in the X and Y directions. Each unit structure RU includes four slits 130. In each unit structure RU, the four slits 130 are arranged in the X and Y directions. One of the rings formed by these four slits is open at an end portion in the Y direction, and the other three are open at positions different from the former by 90°, 180°, and 270°.

When this structure is adopted, differences are less likely to occur in the transmission spectrum indicated by the broken line in FIG. 16 and the transmittance distribution indicated by the broken line in FIG. 17, among the case where the pressure-sensitive adhesive tape 40 is peeled from one end side in the Y direction, the case where the peeling is performed from the other end side in the Y direction, the case where the peeling is performed from one end side in the X direction, and the case where the peeling off is performed from the other end side in the X direction. Therefore, the authenticity determination can be performed with an even higher accuracy.

When the structure described with reference to FIG. 3 is adopted, the transmission spectrum differs between when s-polarized light is applied as terahertz waves and when p-polarized light is applied as terahertz waves, as indicated by curves C1 and C2 in FIG. 26. In contrast, when the structure described with reference to FIG. 31 is adopted, the transmission spectrum of the case where s-polarized light is applied as terahertz waves and the transmission spectrum of the case where p-polarized light is applied as terahertz waves are substantially the same, if the size of the region to which terahertz waves are applied is equal to or larger than the size of the unit region RU. Therefore, a transmission spectrum corresponding to, for example, an arithmetical mean of the transmission spectrum indicated by the curve C1 and the transmission spectrum indicated by the curve C2 in FIG. 26 is obtained. In this case, a transmittance distribution corresponding to, for example, an arithmetic mean of the transmittance distribution indicated by the broken line and the transmittance distribution indicated by the solid line in FIG. 17 is obtained, regardless of the vibration direction of the electric field vector of terahertz waves.

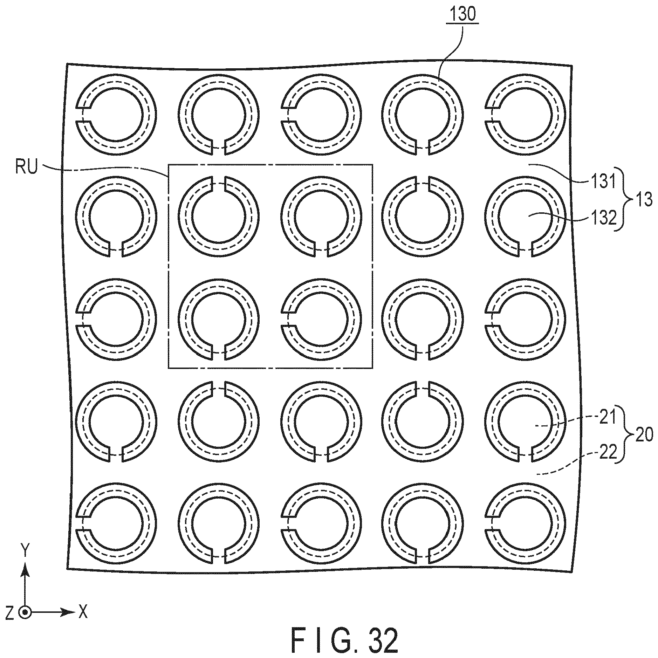

FIG. 32 is an enlarged top view of a structure according to yet another modification.

In FIG. 32, a metallic layer 13 has a structure in which unit structures RU are arranged in the X and Y directions. Each unit structure RU includes four slits 130. In each unit structure RU, the four slits 130 are arranged in the X and Y directions. One of the rings formed by these four slits is open at an end portion in the Y direction, the other is open at a position 90° different from the former, and the remaining two are open at a position 180° different from the former.

When this structure is adopted, differences are less likely to occur in the transmission spectrum indicated by the broken line in FIG. 16 and the transmittance distribution indicated by the broken line in FIG. 17, among the case where the pressure-sensitive adhesive tape 40 is peeled from one end side in the Y direction, the case where the peeling is performed from the other end side in the Y direction, the case where the peeling is performed from one end side in the X direction, and the case where the peeling off is performed from the other end side in the X direction, even though the likelihood is not as low as that in the case of adopting the structure described with reference to FIG. 31. Therefore, the authenticity determination can be performed with an even higher accuracy.

In the structure described with reference to FIG. 32, each unit structure RU includes three slits 130 each forming a ring that is open in the Y direction and one slit 130 which forms a ring that is open in the X direction. Accordingly, if the size of the region to which terahertz waves are applied is equal to or larger than the size of the unit region RU, the transmittance when the structure described with reference to FIG. 32 is adopted will be a value substantially equal to (T_{X} + 3 × T_{Y}) / 4.

Therefore, when s-polarized light is irradiated as terahertz waves, a transmission spectrum is obtained that is substantially equal to that calculated by multiplying the transmittance represented by the curve C1 in FIG. 26 by 3, adding the transmittance represented by the curve C2 in FIG. 26 to the product, and dividing the sum by 4. When p-polarized light is applied as terahertz waves, a transmission spectrum is obtained that is substantially equal to that calculated by multiplying the transmittance represented by the curve C2 in FIG. 26 by 3, adding the transmittance represented by the curve C1 in FIG. 26 to the product, and dividing the sum by 4.

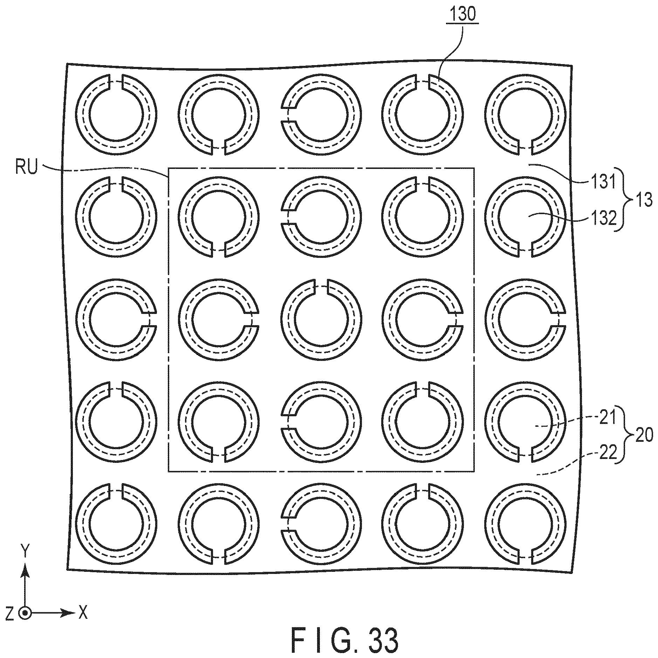

FIG. 33 is an enlarged top view of a structure according to yet another modification.

In FIG. 33, a metallic layer 13 has a structure in which unit structures RU are arranged in the X and Y directions. Each unit structure RU includes nine slits 130. In each unit structure RU, the nine slits 130 are arranged in three rows and three columns in the X and Y directions. Of the rings formed by these nine slits, the central ring is open at an end portion in the Y direction, two rings that are adjacent to each other in the X direction with the central ring interposed therebetween are open at a position 90° different from the former, two rings that are adjacent to each other in the Y direction with the central ring interposed therebetween are open at a position 270° different from the former, one of two pairs of rings that are adjacent to each other in the Y direction with the central row interposed therebetween is open at the same position as the central ring, and the other pair of rings that are adjacent to each other in the Y direction with the central row interposed therebetween is open at a position 180° different from the central ring.

When this structure is adopted, differences in the transmission spectrum indicated by the broken line in FIG. 16 and the transmittance distribution indicated by the broken line in FIG. 17 are less likely to occur, among the case where the pressure-sensitive adhesive tape 40 is peeled off from one end side in the Y direction, the case where the peeling off is performed from the other end side in the Y direction, the case where the peeling is performed from one end side in the X direction, and the case where the peeling is performed from the other end side in the X direction. Therefore, the authenticity determination can be performed with an even higher accuracy.

In the structure described with reference to FIG. 33, each unit structure RU includes five slits 130 each forming a ring that is open in the Y direction and four slits 130 each forming a ring that is open in the X direction. Accordingly, if the size of the region to which the terahertz waves are applied is equal to or larger than the size of the unit region RU, the transmittance when the structure described with reference to FIG. 33 is adopted will be a value substantially equal to (4 × T_{X} + 5 × T_{Y}) / 9.

Therefore, when s-polarized light is applied as terahertz waves, a transmission spectrum is obtained that is substantially equal to that calculated by adding a product obtained by multiplying the transmittance represented by the curve C1 in FIG. 26 by 5 and a product obtained by multiplying the transmittance represented by the curve C2 in FIG. 26 by 4 and dividing the sum by 9. When p-polarized light is applied as terahertz waves, a transmission spectrum is obtained that is substantially equal to that calculated by adding a product obtained by multiplying the transmittance represented by the curve C2 in FIG. 26 by 5 and a product obtained by multiplying the transmittance represented by the curve C1 in FIG. 26 by 4 and dividing the sum by 9.

As described above, when one or more of the plurality of rings formed by the slits 130 and one or more of the other rings are open at different positions, authenticity determination can be performed with a higher accuracy.

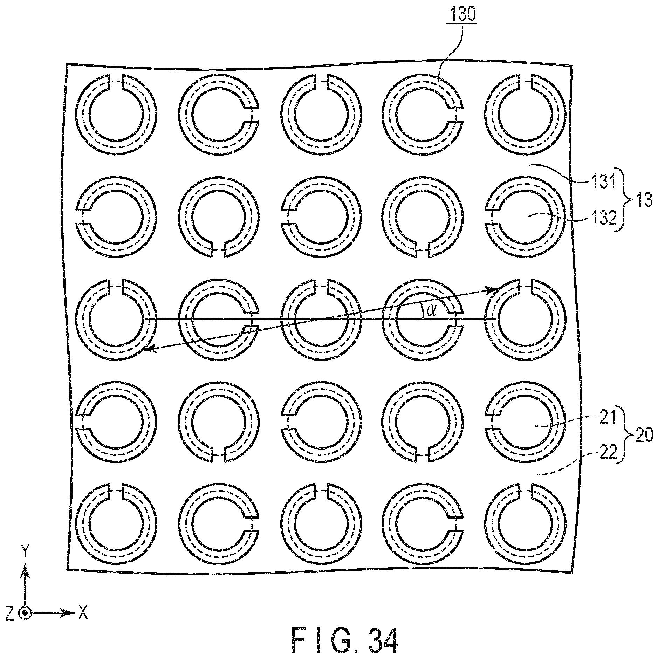

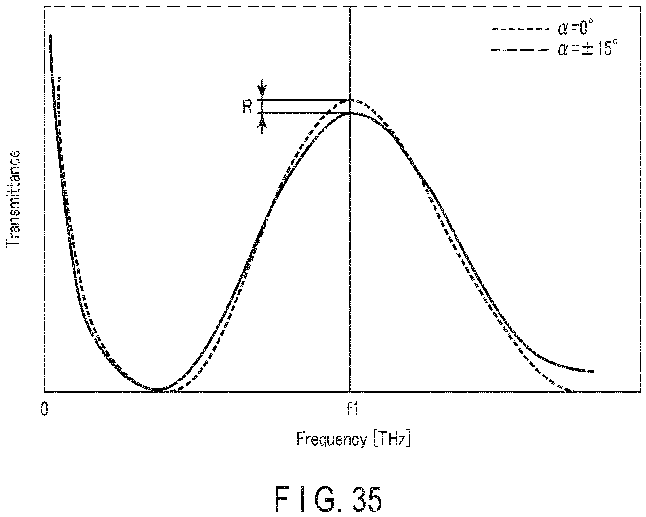

In addition, when any of the structures described with reference to FIGS. 31 to 33 is adopted, the effects of the vibration direction of the electric field vector of the terahertz waves on the transmittance can be reduced, as compared to a structure in which all the positions of the openings of the rings formed by the slits 130 are the same, that is, a structure in which the angles formed by line segments connecting the centers of the rings and the positions of the openings with respect to the X direction are the same, and the change in transmittance according to the angle is utilized for authenticity determination. This will be further described with reference to FIGS. 34 and 35.

FIG. 34 is a top view illustrating an angle formed by the vibration direction of the electric field vector of terahertz waves with respect to the arrangement orientations of the slits. FIG. 35 is a graph illustrating an example of a transmission spectrum.

In FIG. 34, the vibration directions of the electric field vector of terahertz waves are indicated by the double-headed arrow. In FIG. 34, an angle formed by the vibration direction with respect to the X direction is assumed to be α.

When any of the structures described with reference to FIGS. 31 to 33 is adopted, the transmission spectrum when the angle α is ± 15° is substantially equal to the transmission spectrum when the angle α is 0°, as shown in FIG. 35. Specifically, when, for example, a structure is adopted in which positions of openings of the rings formed by the slits 130 are all the same and the angles formed by line segments connecting the centers of the rings and the positions of the openings with respect to the X direction is 60°, the difference between the transmittance at the angle α of -15° at the primary resonance frequency f1 and the transmittance at the angle α of +15° at the primary resonance frequency f1 is, for example, approximately 20%. On the other hand, when the structure described with reference to FIG. 31 is adopted, the difference between the transmittance when the angle α at the primary resonance frequency f1 is 0° and the transmittance when the angle α at the primary resonance frequency f1 is ±15° is, for example, approximately 0%. When the structure described with reference to FIG. 32 is adopted, the difference between the transmittance at the primary resonance frequency f1 when the angle α is 0° and the transmittance at the primary resonance frequency f1 when the angle α is ±15° is, for example, approximately 1%. When the structure described with reference to FIG. 33 is adopted, the difference between the transmittance at the primary resonance frequency f1 when the angle α is 0° and the transmittance at the primary resonance frequency f1 when the angle α is ±15° is, for example, approximately 0.3%.

Two or more of the structures described with reference to FIGS. 30 to 33 may be adopted for a single security device 1. In this case, a more complicated transmittance distribution will be obtained.

The structure described with reference to FIGS. 30 to 33 is also applicable to the security device 1 described in the second embodiment. Also in this case, the same effect as described above can be obtained.

### [Examples]

Hereinafter, examples of the present invention will be described. The present invention is not limited to these examples. The scope of the invention is defined in the appended claims.

### <Manufacturing of Transfer Foil>

The transfer foil 4 shown in FIG. 29 was produced as follows. Herein, the structure shown in FIG. 20 was adopted for the security device 1.

First, a coating liquid for forming a protective layer with the following composition was prepared.

### [Coating Liquid for Forming Protective Layer]

Acrylic resin (BR-116: manufactured by Mitsubishi Rayon Col., Ltd) 20 parts
Solvent (toluene / MEK / ethyl acetate) 40 parts/ 35 parts/ 5 parts

The "MEK" refers to methyl ethyl ketone. The term "part" used herein refers to a part by mass.

This coating solution was applied to a support member 51, and thereby a protective layer 11 was formed. Herein, a transparent PET film with a thickness of 19 µm was used as the support member 51. The coating amount of the coating liquid was set in such a manner that the thickness of the protective layer 11 was 1.0 µm.

Subsequently, a coating liquid for forming a relief structure-forming layer with the following composition was prepared.

### [Coating Liquid for Forming Relief Structure-Forming Layer]

Vinyl chloride-vinyl acetate copolymer (SOLBIN (registered trademark) CH: manufactured by Nissin Chemical Industry Co., Ltd.) 25 parts
Urethane resin (CORONATE (registered trademark) T-100: manufactured by Nippon Polyurethane Industry Co., Ltd.) 10 parts
MEK 70 parts
Toluene 30 parts

This coating liquid was applied to the protective layer 11, and thereby a relief structure-forming layer was formed. Here, the coating amount of the coating liquid was set in such a manner that the thickness of the relief structure-forming layer was 1.0 µm.

Subsequently, a diffraction grating structure was provided on the relief structure forming-layer. Specifically, a roll-shaped diffraction grating plate was pressed against the relief structure-forming layer under the conditions in which the temperature was 160 °C and the linear load was 40kg/cm, and thereby a diffraction grating structure was provided. In this manner, the concealing layer 12 was provided on the protective layer 11.

Next, a metallic layer 13 was provided on the concealing layer 12. First, aluminum was deposited on the concealing layer 12 by the vacuum evaporation method. The vacuum evaporation was carried out such that the aluminum layer had a thickness of 60 nm.

An etching mask layer was provided thereon, and etching was performed. As the coating liquid for forming the etching mask layer, a coating liquid with the following composition was used.

### [Coating Liquid for Forming Etching Mask Layer]

Vinyl chloride-vinyl acetate copolymer (SOLBIN C: manufactured by Nissin Chemical Industry Co., Ltd.) 30 parts

### MEK 70 parts

This coating solution was applied to the above-described metallic layer such that its thickness was 1.0 um, and thereby an etching mask layer was provided. Through holes corresponding to the slits 130 shown in FIG. 19 were provided in the etching mask layer. This patterning was performed through the utilization of a screen printing method.

Thereafter, portions of the aluminum layer that were not covered with the etching mask layer were removed by etching. Specifically, the aluminum layer was treated with 1.5 N sodium hydroxide solution, washed with water, and neutralized with 0.1 N hydrochloric acid. In this manner, the metallic layer 13 provided with the slits 130 was obtained.

The obtained slits 130 were rings each opened at a single position in the Y direction, and the dimensions thereof were as follows. That is, the width of the slit 130 was 20 µm, and the distance between one end of the slit 130 and the other end of the slit 130 was 32 µm.

After the etching mask layer was removed, a ceramic layer 14 was provided on the metallic layer 13. Here, MgF₂ was vapor-deposited by the vacuum evaporation method to have a thickness of 100 nm.

Thereafter, an adhesive layer 20 was provided on the ceramic layer 14.

First, first portions 21 were formed. The first portions 21 were made from a mixture of an adhesive and an additive for reducing the adhesive power as shown below. That is, an acrylic urethane resin was used as an adhesive, and nitrocellulose was used as an additive.

### [Material for Forming First Portion 21]

Nitrocellulose (H1/8: manufactured by Taihei Chemicals Co., Ltd.) 20 parts
Acrylic urethane resin (8UA347: manufactured by Taisei Fine Chemicals Limited) 50 parts

### MEK 30 parts

The mixture was applied to the ceramic layer 14 in a pattern. Specifically, printing was performed using a plate designed in such a manner that this mixture was printed at positions corresponding to the first regions 131 of the metallic layer 13. Here, the coating amount of the mixture was set in such a manner that the thickness of the first portion 21 was 1 µm.

Next, a second portion 22 was formed. The second portion 22 was made from an adhesive shown below: That is, a mixture of a vinyl chloride-vinyl acetate copolymer and a polyester resin was used as an adhesive.

### [Material for Forming Second Portion 22]

Vinyl chloride-vinyl acetate copolymer (SOLBIN C: manufactured by Nissin Chemical Industry Co., Ltd.) 30 parts
Polyester resin (VYLON (registered trademark) 200: manufactured by Toyobo Co., Ltd.) 20 parts
MEK 25 parts
Toluene 25 parts

The mixture was applied to the ceramic layer 14 in a pattern. Specifically, the mixture was printed at a position corresponding to the second region 132 of the metallic layer 13 using a plate having a reversed pattern with respect to that of the plate used in forming the first portion 21. Here, the coating amount of the mixture was set in such a manner that the thickness of the second portion 22 was 1.0 um.

The transfer foil 4 was produced by the above method. In the security device 1 included in the transfer foil 4, the first portion 21 achieves a lower adhesive strength to the anticounterfeit structure 10 than that achieved by the second portion 22.

### <Peeling Test>

A gift certificate sample containing a paper substrate was prepared as the article 30. The transfer material layer 50 included in the transfer foil 4 was thermally transferred onto the article 30 by hot stamping. Thereby, the security-device-equipped article 2 described with reference to FIG. 20, etc. was obtained.

The security device 1 of the obtained security-device-equipped article 2 was subjected to a peeling test with a pressure-sensitive adhesive tape. Here, a strong adhesive tape (DUCT-TP18 manufactured by 3M Scotch Co., Ltd.) was used as the pressure-sensitive adhesive tape.

The pressure-sensitive adhesive tape was attached to a portion of the security-device-equipped article 2 where the security device 1 was located, and then peeled off. Thereafter, the portion 1a adhered to the peeled adhesive tape was attached to another article 30'. Here, a paper piece obtained by color-copying the gift certificate sample, which is the article 30, was used as another article 30'.

In the above-described manner, a falsified security-device-equipped article 2' was produced.

### <Authenticity Determination>

The falsified security-device-equipped article 2' was subjected to authenticity determination through the utilization of transmission of terahertz waves by the method described with reference to FIG. 27, etc. That is, p-polarized light and s-polarized light with specific frequencies were applied to the main surface of the falsified security article 2' as terahertz waves, and the transmittance was measured, while moving the measurement direction in the X direction.

As a result, the same results as those described with reference to FIG. 27 were obtained. That is, the scan results of the falsified security-device-equipped article 2' were not significantly different between the scan results obtained by application of p-polarized light and the scan results obtained by application of s-polarized light. This is different from the scan results of the authentic security-device-equipped article 2, which causes a significant difference between the scan results obtained by application of p-polarized light and the scan results obtained by application of s-polarized light. Therefore, it was possible to easily determine that the obtained security-device-equipped article was a falsified security-device-equipped article.

### REFERENCE SIGNS LIST

1...Security device, 2 and 3...Security-device-equipped article, or security article 4... Transfer foil, 10... Anticounterfeit structure, 11...Protective layer, 12...Concealing layer, 13...Metallic layer, 14...Ceramic layer, 20...Adhesive layer, 21...First portion, 22... Second portion, 23...Adhesive, 30 and 30'...Article, 31...Article main body, 32...Printed layer, 40 and 40'...Adhesive tape, 50... Transfer material layer, 51...Support member, 130...Slit, 131...First region, 132... Second region.

## Claims

1. A security device (1) comprising:
an anticounterfeit structure (10) including a metallic layer (13) with a plurality of slits (130), the slits (130) forming a plurality of rings, each of the slits (130) including one end facing another end of the slit (130) with a gap interposed therebetween, the anticounterfeit structure (10) having a transmittance peak resulting from resonance in the metallic layer (13); and
an adhesive layer (20) provided on one main surface of the anticounterfeit structure (10),
**characterized in that**
the adhesive layer (20) includes a first portion (21) in contact with a partial region of the main surface and a second portion (22) in contact with another partial region of the main surface,
the first portion (21) is configured to achieve a lower adhesive strength to the anticounterfeit structure (10) than that achieved by the second portion (22), and
one of the first portion (21) and the second portion (22) is located at a portion (132) of the metallic layer (13) which is surrounded by each of the rings formed by the slits (130).

2. The security device (1) according to claim 1, wherein the anticounterfeit structure (10) has the transmittance peak within a terahertz frequency band.

3. The security device (1) according to claim 1 or 2, wherein an inner diameter of each of the rings is equal to or smaller than 1000 µm.

4. The security device (1) according to any one of claims 1 to 3, wherein the rings are open at identical positions.

5. The security device (1) according to any one of claims 1 to 3, wherein one or more of the rings and another one or more of the rings are open at different positions.

6. The security device (1) according to any one of claims 1 to 5, wherein the first portion (21) is located at the portion (132) of the metallic layer (13) which is surrounded by each of the rings formed by the slits (130), and the second portion (22) is located at a portion (131) of the metallic layer (13) which is outside each of the rings (130).

7. The security device (1) according to any one of claims 1 to 6, wherein the anticounterfeit structure (10) further includes a ceramic layer (14) located on a region of the metallic layer (13) which extends across a boundary between the first portion (21) and the second portion (22).

8. The security device (1) according to any one of claims 1 to 7, wherein the adhesive layer (20) is made of a pressure-sensitive adhesive.

9. A transfer foil (4) comprising:
a transfer material layer (50) including the security device (1) according to any one of claims 1 to 8; and
a support member (51) releasably supporting the transfer material layer (50) such that the anticounterfeit structure (10) is interposed between the support member (51) and the adhesive layer (20).

10. A security article (2; 3) comprising:
the security device (1) according to any one of claims 1 to 8; and
an article (30) wherein the security device (1) attached to the article (30) by the adhesive layer (20).

## Patentansprüche

1. Sicherheitsvorrichtung (1) mit:
einer Fälschungssicherheitsstruktur (10), die eine Metallschicht (13) mit einer Vielzahl von Schlitzen (130) aufweist, wobei die Schlitze (130) eine Vielzahl von Ringen bilden, wobei jeder der Schlitze (130) ein Ende aufweist, das mit einem dazwischenliegenden Spalt einem anderen Ende des Schlitzes (130) zugewandt ist, wobei die Fälschungssicherheitsstruktur (10) eine sich aus Resonanz in der Metallschicht (13) ergebende Übertragungsspitze hat; und
einer Klebstoffschicht (20), die auf einer Hauptfläche der Fälschungssicherheitsstruktur (10) vorgesehen ist,
**dadurch gekennzeichnet, dass**
die Klebstoffschicht (20) einen ersten Abschnitt (21) in Kontakt mit einem Teilbereich der Hauptfläche und einen zweiten Abschnitt (22) in Kontakt mit einem anderen Teilbereich der Hauptfläche aufweist,
der erste Abschnitt (21) so konfiguriert ist, dass er eine geringere Klebekraft an der Fälschungssicherheitsstruktur (10) als die erreicht, die durch den zweiten Abschnitt (22) erreicht wird, und
sich einer von dem ersten Abschnitt (21) und dem zweiten Abschnitt (22) an einem Abschnitt (132) der Metallschicht (13) befindet, der von jedem der durch die Schlitze (130) gebildeten Ringe umgeben ist.

2. Sicherheitsvorrichtung (1) nach Anspruch 1, wobei die Fälschungssicherheitsstruktur (10) die Übertragungsspitze innerhalb eines Terahertz-Frequenzbandes hat.

3. Sicherheitsvorrichtung (1) nach Anspruch 1 oder 2, wobei ein Innendurchmesser von jedem der Ringe kleiner oder gleich 1000 µm ist.

4. Sicherheitsvorrichtung (1) nach einem der Ansprüche 1 bis 3, wobei die Ringe an identischen Positionen offen sind.

5. Sicherheitsvorrichtung (1) nach einem der Ansprüche 1 bis 3, wobei einer oder mehrere der Ringe und ein anderer oder mehrere der Ringe an verschiedenen Positionen offen sind.

6. Sicherheitsvorrichtung (1) nach einem der Ansprüche 1 bis 5, wobei sich der erste Abschnitt (21) an dem Abschnitt (132) der Metallschicht (13) befindet, der von jedem der durch die Schlitze (130) gebildeten Ringe umgeben ist, und sich der zweite Abschnitt (22) an einem Abschnitt (131) der Metallschicht (13) befindet, der außerhalb von jedem der Ringe (130) liegt.

7. Sicherheitsvorrichtung (1) nach einem der Ansprüche 1 bis 6, wobei die Fälschungssicherheitsstruktur (10) außerdem eine Keramikschicht (14) aufweist, die sich auf einem Bereich der Metallschicht (13) befindet, der sich über eine Grenze zwischen dem ersten Abschnitt (21) und dem zweiten Abschnitt (22) erstreckt.

8. Sicherheitsvorrichtung (1) nach einem der Ansprüche 1 bis 7, wobei die Klebstoffschicht (20) aus einem Haftkleber besteht.

9. Transferfolie (4) mit:
einer Transfermaterialschicht (50), die die Sicherheitsvorrichtung (1) nach einem der Ansprüche 1 bis 8 aufweist; und
einem Trageelement (51), das die Transfermaterialschicht (50) lösbar derart trägt, dass die Fälschungssicherheitsstruktur (10) zwischen dem Trageelement (51) und der Klebstoffschicht (20) angeordnet ist.

10. Sicherheitsartikel (2; 3) mit:
der Sicherheitsvorrichtung (1) nach einem der Ansprüche 1 bis 8; und
einem Artikel (30), wobei die Sicherheitsvorrichtung (1) durch die Klebstoffschicht (20) an dem Artikel (30) angebracht ist.

## Revendications

1. Dispositif de sécurité (1) comprenant :
une structure anti-contrefaçon (10) comprenant une couche métallique (13) ayant une pluralité de fentes (130), les fentes (130) formant une pluralité d'anneaux, chacune des fentes (130) comprenant une extrémité faisant face à une autre extrémité de la fente (130) avec un espace interposé entre elles, la structure anti-contrefaçon (10) ayant un pic de transmittance résultant d'une résonance dans la couche métallique (13) ; et
une couche adhésive (20) prévue sur une surface principale de la structure anti-contrefaçon (10),
**caractérisé en ce que**
la couche adhésive (20) comprend une première partie (21) en contact avec une zone partielle de la surface principale et une seconde partie (22) en contact avec une autre zone partielle de la surface principale,
la première partie (21) est configurée pour obtenir une force d'adhésion à la structure anti-contrefaçon (10) inférieure à celle obtenue par la seconde partie (22), et
l'une de la première partie (21) et de la seconde partie (22) est située sur une partie (132) de la couche métallique (13) qui est entourée par chacun des anneaux formés par les fentes (130).

2. Dispositif de sécurité (1) selon la revendication 1, dans lequel la structure anti-contrefaçon (10) a le pic de transmittance dans une bande de fréquence térahertz.

3. Dispositif de sécurité (1) selon la revendication 1 ou 2, dans lequel un diamètre intérieur de chacun des anneaux est égal ou inférieur à 1000 µm.

4. Dispositif de sécurité (1) selon l'une des revendications 1 à 3, dans lequel les anneaux sont ouverts à des positions identiques.

5. Dispositif de sécurité (1) selon l'une des revendications 1 à 3, dans lequel un ou plusieurs des anneaux et un autre ou plusieurs des anneaux sont ouverts à des positions différentes.

6. Dispositif de sécurité (1) selon l'une des revendications 1 à 5, dans lequel la première partie (21) est située sur la partie (132) de la couche métallique (13) qui est entourée par chacun des anneaux formés par les fentes (130), et la seconde partie (22) est située sur une partie (131) de la couche métallique (13) qui est à l'extérieur de chacun des anneaux (130).

7. Dispositif de sécurité (1) selon l'une des revendications 1 à 6, dans lequel la structure anti-contrefaçon (10) comprend en outre une couche de céramique (14) située sur une zone de la couche métallique (13) qui s'étend à travers une limite entre la première partie (21) et la seconde partie (22).

8. Dispositif de sécurité (1) selon l'une des revendications 1 à 7, dans lequel la couche adhésive (20) est constituée d'un adhésif sensible à la pression.

9. Feuille de transfert (4) comprenant :
une couche de matériau de transfert (50) comprenant le dispositif de sécurité (1) selon l'une des revendications 1 à 8 ; et
un élément de support (51) supportant de manière amovible la couche de matériau de transfert (50) de sorte que la structure anti-contrefaçon (10) soit interposée entre l'élément de support (51) et la couche adhésive (20).

10. Article de sécurité (2 ; 3) comprenant :
le dispositif de sécurité (1) selon l'une des revendications 1 à 8 ; et
un article (30) dans lequel le dispositif de sécurité (1) est attaché à l'article (30) par la couche adhésive (20).
